# EUROPEAN PATENT SPECIFICATION

(11) **EP 2 597 967 B1**
(45) Date of publication and mention of the grant of the patent: **06.05.2015**
(21) Application number: 11746078.2
(22) Date of filing: 29.07.2011
(51) Int. Cl.: A23L 1/00, A23P 1/04, A23L 1/236, A23G 1/32, A23G 3/34, A23G 4/06

(54) **A DELIVERY SYSTEM FOR ACTIVE COMPONENTS AS PART OF AN EDIBLE COMPOSITION**
FREISETZUNGSSYSTEM FÜR WIRKSTOFFE ALS TEIL EINER ESSBAREN ZUSAMMENSETZUNG
SYSTÈME D'ADMINISTRATION POUR DES COMPOSANTS ACTIFS EN TANT QUE PARTIE D'UNE COMPOSITION COMESTIBLE

(30) Priority: 30.07.2010 US 369323 P
(43) Date of publication of application: 05.06.2013
(73) Proprietor: Intercontinental Great Brands LLC, East Hanover, NJ 07936 (US)
(72) Inventor: ANASTASIOU, Theodore James, Holmdel New Jersey 07733 (US); GUAN, Junjie, Edgewater New Jersey 07020 (US); BINDRA, Mandeep, Somerset New Jersey 08873 (US)
(74) Representative: Wilson Gunn
(86) International application number: PCT/US2011/045930
(87) International publication number: WO 2012/016161

(56) References cited:
- EP-A1- 2 053 929
- US-A1- 2007 003 663
- US-A1- 2007 298 061

## Description

### BACKGROUND OF THE INVENTION

### FIELD OF THE INVENTION

A delivery system for inclusion in an edible composition is formulated to have at least one active component with an encapsulating material for delivering the active component upon consumption of the edible composition.

### DESCRIPTION OF THE BACKGROUND

High intensity sweeteners generally have a sweetening intensity greater than sugar (sucrose) and a caloric value lower than that of sugar at equivalent sweetness levels. In some situations, it is especially desirable to control the total release of high intensity sweeteners in compositions since the high sweetness levels can easily overwhelm the consumer. Moreover, the controlled release of the sweetener provides desirable masking of unpleasant tasting materials and may help bring out flavor characteristics of other ingredients. Because each high intensity sweetener is chemically and physically distinct, each is a challenge to use in an edible composition and each exhibits one or more shortcomings, which may be moderated by encapsulation.

For example, many high intensity sweeteners lose their sweetness intensity rapidly when used in edible compositions such as chewing gums and confections with certain flavors. Encapsulation can modulate and prolong release to provide a more desirable taste profile. Some high intensity sweeteners such as saccharin, stevioside, acesulfame-K, glycyrrhizin, and thaumatin have an associated bitter taste or off-note. Certain high intensity sweeteners are also unstable in the presence of certain chemicals including aldehydes and ketones, and sensitive to exposure to environmental conditions including moisture. Solid sucralose is known to turn dark either during prolonged storage or upon exposure to heat and ambient air. Encapsulation can be used to isolate unstable compounds to prevent degradation and prolong shelf life.

Typically, the taste profile of a high intensity sweetener can be described as a rapid burst of sweetness. Usually, high intensity sweeteners reach their peak sweet taste rapidly, with the intensity of sweet taste rapidly declining soon thereafter. The initial rapid burst can be unpleasant to many consumers, as the strong sweet taste tends to overpower the other flavors that may be present in the edible composition. The relatively rapid loss of sweetness can also result in a bitter aftertaste. For this reason, we have previously described encapsulating high intensity sweeteners with an encapsulating material to modulate and prolong the release profile and to chemically stabilize and enhance the overall taste profile.

Tensile strengths of about and exceeding 6,500 psi in the encapsulation systems described previously delay active ingredient release from chewable compositions. The release rate of encapsulated actives, such as sweeteners, flavors, functional ingredients, etc were described to depend on the tensile strength, hydrophobicity, particle size, distribution, and degree of dispersion and chemical stability of encapsulations. See US Patent Appl. Publication Nos. 2007/0298061, 2006/0263480, 2006/0263479, 2006/0263478, 2006/0263477, 2006/0263473, 200610263472, 2006/0263413, 2006/0193896, 2006/0034897, 2005/0220867, 2005/0214348, and 2005/0112236. Additionally, polymer-based delivery systems had been described before, e.g., in U.S. 4,978,537 and U.S. 4,975,270.

Powdered polymer based high tensile strength matrix encapsulations are used in gums to delay the release of sweeteners and other active ingredients. However high molecular weight polyvinyl acetate encapsulations have high tensile strength under normal conditions but can lose strength when used with high levels of solvents (ethanol, triacetin, flavors etc) that are commonly used in the manufacture of chewing gum as well as under high temperature and/or high shear conditions used to mix the components of a chewing gum.

### SUMMARY OF THE INVENTION

The inventors have found that in the prior processes used to produce polymer based matrix encapsulations a relatively high amount of active on the surface of the matrix results. This amount of surface active is quickly released and therefore unavailable for prolonging the release of the active from the matrix. The inventors have found a way to minimize the amount of surface active in polymer-based encapsulations.

The present invention is an advance in the art by providing a delivery system that provides significantly improved control and/or delay of release of one or more active agents. Specifically, the present invention is directed to a delivery system for inclusion in an edible composition comprising
at least one active component, wherein the active component has an average particle size of about 0.3 to about 20 microns;
at least one polymeric material selected from the group consisting of polyvinyl acetate, polyethylene, crosslinked polyvinyl pyrrolidone, polymethylmethacrylate, polylactic acid, polyhydroxyalkanoates, ethylcellulose, polyvinyl acetatephthalate, polyethylene glycol esters, methacrylic acid-co-methylmethacrylate and combinations thereof;
at least one insoluble additive, wherein the additive is selected from the group consisting of hydrogenated vegetable oil, talc, calcium carbonate, dicalcium phosphate, titanium dioxide, silica and silicates and combinations thereof, and the amount of additive is less than 10% by weight of the delivery system;
wherein the delivery system if substantially free of solvent;
wherein the at least one polymeric material encapsulates at least 70% of the at least one active component;
wherein the delivery system has an average particle size of about 125 microns to about 900 microns; and
wherein the dispersion of active component particles, as measured by the average distance between active component particles in the delivery system divided by the average particle diameter of the active component particles, is from 0.5 to 20.

The present invention provides a new approach to the controlled release of an active component in edible compositions such as, for example, chewing gum and confectionery compositions by extending the release of the actives contained in delivery systems quite significantly.

In one embodiment, such further extended release is achieved by compounding the active with the polymeric material at least one additional time after the initial compounding step, e.g., in an extruder. The inventors work showed that the second compounding of the polymer and active is not a result of more thorough mixing as experiments performed by the inventors have shown that increased mixing and/or mixing efficiency does not result in the same level of encapsulation and thus delivery effects as the mixing at least a second time.

The active component(s) and materials used to encapsulate the same provide a delivery system(s) that enables exceptional control of the release of the active component over a wide range of delivery systems and takes into account the use of a range of encapsulating materials and additives that may be used to formulate the delivery system. The encapsulated active components are preserved until release is desirable and therefore protected against moisture, reactive compounds, pH changes and the like. When the active component is a sweetener, the delivery system is tailored to the sweetener to provide consistent sustained release, thus extending the time the sweetener is released to provide an edible composition which provides a long lasting desirable taste profile, increased salivation and overall enjoyment of the taste imparted there from without the disadvantage of prior art systems in which the sweetener may be released at less or more than a desirable profile.

The present invention, for example, enables the formulation of a suitable target delivery system by focusing on one or more variables (i.e., tensile strength and/or hydrophobicity) and therefore taking into account all components of the delivery system including encapsulating materials and any additives that may be desirably added to the formulation and enables the delivery system when added to an edible composition to release the active component at a desirable release profile.

### DETAILED DESCRIPTION OF THE INVENTION

In one aspect of the present invention, there is provided a delivery system for inclusion in an edible composition such as a chewing gum composition or confectionery composition comprising at least one active component and at least one encapsulating material.

In one aspect of the invention, the at least one polymeric material encapsulates at least 70% of the at least one active component, including at least 75, 80, 85, 95, 97, 98, 99% as well as all values and ranges therein.

In some embodiments, the delivery system may be in the form of a powder or granules. In one embodiment, the average particle size is desirably selected according to the desired rate of release and/or mouthfeel (i.e., grittiness) and the type of carrier incorporated in the edible composition. The particle size, generally, can vary and have a significant effect on the function of the present invention. For example, evaluations show that there exists an inverse relationship between the particle size and the rate of release of the active component. Not to be a limiting feature of the invention, in order to achieve a desirable rate of release of the active component, the particle size is typically at least 125 µm and at most 900 µm.

Thus, in certain embodiments of the present invention, the average particle size is from about 125 µm to about 900 µm, including 140, 160, 180, 200, 220, 240, 260, 280, 300, 320, 340, 360, 380, 400, 420, 440, 460, 480, 500, 520, 540, 560, 580, 600, 620, 640, 660, 680, 700, 720, 740, 760, 780, 800, 820, 840, and all values and ranges there between. In one embodiment of the invention, where the delivery system is incorporated into a chewing gum the particle size can range from about 125 µm to about 900 µm; from about 125 µm to about 250 µm; from about 125 µm to about 420 µm; and/or from about 125 µm to about 710 µm; preferably from about 125 µm to about 420 µm.

In certain advantageous embodiments, the delivery system, particularly during the preparation thereof, includes one or more additives including hydrogenated vegetable oils and certain fillers. Fillers used in edible compositions, such as chewing gums are well known, for example, and include talc, calcium carbonate, dicalcium phosphate, titanium dioxide, silica, and silicates. Silicates include sodium silicates, potassium silicates, calcium silicates, and magnesium silicates. In certain aspects of the invention, these additives are present in the delivery system in an amount of less than 10% by weight of the delivery system, preferably, 1% to 10%. In a further embodiment, the filler is in a ratio of from 0.1 to 0.5 relative to the at least one active. It has been found that the ratio of filler and active when compounding with the polymeric material facilitated incorporation into that polymeric material, reducing the surface active. Adding filler to the delivery system has also been found to prolong the release of the at least one active during consumption by maintaining the delivery system's integrity during chewing and slowing the ingress of moisture into the delivery system.

Preferably, the fillers are water insoluble and have a particle size of not greater than 40 µm, preferably not greater than 30µm, more preferably not greater than 20µm. Combinations of various fillers in various concentrations can be used. It is known from the literature that including fillers such as calcium carbonate or talc can strengthen the matrix of the encapsulation, e.g., composed of polyvinyl acetate. In addition, to fillers the inventors have found that including small particles on the same size order as the fillers of ground encapsulations, e.g., of polymer and sweetener, during the preparation of new delivery system can also enhance the performance of the encapsulation in delivering the active. In certain aspects of the invention, the fillers are present in the delivery system in an amount of from 1 % to 60% by weight. In other embodiments, it may be beneficial to restrict the amount of filler being added to less than 10%, inclusive of 1, 2, 3, 4, 5, 6, 7, 8, and 9% as well as all values and ranges there between. In a further embodiment, the filler is in a ratio of from X to Y relative to the at least one active. It has been found that the ratio of filler and active when compounding with the polymeric material facilitated incorporation into that polymeric material, reducing the surface active.

One way to measure the amount of surface active of a delivery system is to measure the amount of active released or extracted into water with stirring. In one embodiment, for example, the sample to be measured is weighed then added to water with stirring. After 30 seconds, the sample and the wash water are analyzed for the amount of active, with the active found in the wash water indicative of surface active.

The released amount represents the surface amount and can indicate the ability of the delivery system to offer delayed release. In some embodiments, the delivery system has a released amount (R40) less than 40% w/w by weight of the delivery system released into water after 40 minutes of stirring at room temperature, including less than 30, 25, 20, 15, 10, 5, 4.75, 4.5, 4.25, 3.75, 3.5, 3.0, 2.75, 2.25, 2.0, 1.0 or less than 1.0% w/w of the delivery system, including all values and ranges there between.

In a further aspect of the present invention there is provided an edible composition such as a chewing gum composition or a confectionery composition comprising at least one edible composition-forming component and a delivery system comprising at least one active component and at least one encapsulating material.

In a still further aspect of the invention there is provided a method of preparing a target delivery system for an edible composition comprising combining at least one active component, at least one encapsulating material, and optionally at least one additive until a preselected and/or desired target delivery system based on the criteria described herein is obtained based on comparison with at least one sample delivery system having the same or similar active component and a known release profile of the active component.

There is also provided a method of preparing a target delivery system for an edible composition useful for delivering at least one active component at a desired release profile, said method comprising mixing the at least one active component with an encapsulating material in a manner that provides the target delivery system with the preselected and/or desired characteristics as described herein.

In a particularly preferred aspect of manufacturing the delivery system as described herein, the polymeric material and the active component, optionally also with one or more fillers is mixed together in a mixing apparatus such as an extruder. After that mixture has been made, it is introduced again into the mixing apparatus, e.g., an extruder and again compounded. In one embodiment, the second mixing step can also include the addition of further filler or fillers. It is also possible to conduct further compounding steps after the second step, e.g., a third, fourth, fifth, sixth, etc. steps.

The mixer or extruder that can be used is conventional in the art as well- known to the skilled artisan.

In one embodiment, the distribution of active particles within the encapsulation is an important criteria for obtaining the most desirable retention of the active within the delivery system thereby providing better control of the active in terms of release rate and/or time of retention within the delivery system. In one aspect of this embodiment, the active material particles are distributed in a somewhat even manner throughout the polymer matrix. In addition or alternatively, in one embodiment, reducing the size of the active material particles can facilitate control and/or retention of the active in the delivery system. The dispersion of the active particles within the polymer matrix can be represented by the following variables: **d**=active material average particle diameter in the polymer matrix, x= the average distance between active material particles in the matrix, **P**=average diameter of the delivery system or encapsulation, **d₀**=the average particle diameter of the active raw material prior to processing into the delivery system, and L=the active material load relative to the polymer matrix.

In one embodiment, **d**= 0.3-20 µm, inclusive of 0.4-15µm, 1-10 µm as well as all ranges and values there between. In one embodiment, **d₀**=10-50 µm, inclusive of 13-30 µm, 15-20 µm and as well as all ranges and values there between. In one embodiment, **P**=100 to 1000 µm, inclusive of 200 to 800 µm, 250 to 500 µm as well as all ranges and values there between. In one embodiment, **L**= 10-90%, inclusive of 20-75%, 25-60%, 30- 50% as well as all ranges and values there between.

A ratio, **P/d** can be defined as the ratio of the encapsulation particle diameter to the diameter of the active. In one embodiment, the ratio, **P/d** can range from about 25 to about 500, inclusive of 50-400, 100 to 250, 125 to 200 as well as all ranges and values there between, In certain embodiments, if the **P/d** ratio is less than 125, the dispersion can be further enhanced to achieve the desired distribution and dispersion of the active particles within the polymer matrix by increasing the specific mechanical energy during the mixing process, decreasing the active load, **L**, and/or decreasing **d₀**. In other embodiments, if the **P/d** is greater than 125, the dispersion can be further enhanced to achieve the desired distribution and dispersion of the active particles within the polymer matrix by decreasing the active load, **L**, and/or increasing **d₀**.

In further embodiments, the ratio of **x/d** can be used to define the dispersion of the active within the polymer matrix. In a preferred aspect, the ratio, **x/d,** is greater than 0.5, inclusive of greater than 1, 2, 5, 10, 15, 20 as well as all ranges and values there between. To increase the ratio, **x/d,** the load, **L,** can be decreased. Additionally or alternatively, the specific mechanical energy in the mixing process can be increased and **d₀** can increase the **x/d** ratio but up to a point as x is a function of d effecting the specific mechanical energy in the mixing process and **d₀** can effect both x and d. In one embodiment, the ratio **x/d** is maximized while achieving a **P/d** of about 125.

In addition, a method is provided for preparing an edible composition containing at least one delivery system useful for delivering at least one active component at a desired release profile, which comprises mixing the at least one active component with an encapsulating material in a manner that provides the target delivery system with the preselected and/or desired characteristics as described herein associated with the desired release rate and/or release profile enabling the delivery system to release the at least one active component from the edible composition at the desired release profile, and adding the target delivery system to the edible composition.

There is also provided edible compositions containing the delivery system described herein. Although one embodiment of the present invention relates to chewing gum compositions, confectionery compositions and beverages, the present invention can be utilized to produce a variety of edible compositions including, but not limited to, food products, foodstuffs, nutrient-containing compositions, pharmaceuticals, nutraceuticals, vitamins and other products that may be prepared for consumption by the consumer. As used herein, chewing gum compositions include bubble gum compositions. Because the delivery system may be readily incorporated into an edible composition, the edible compositions which may benefit from and are encompassed by the present invention are wide ranging as indicated above.

Further in another embodiment, improved solvent (triacetin, mint flavors, fruit flavors) resistance during manufacturing of chewing gums. This solvent resistance improvement is compared to as powdered particles of encapsulations that have large surface area that results in particle swelling and subsequent deterioration of encapsulation efficacy under high shear.

The term "delivery system" as used herein is meant to encompass the at least one active component with the at least one encapsulating material as well as other optional additives used to form the delivery system as hereinafter described. It will be understood that the edible compositions of the present invention may contain a plurality of delivery systems with each delivery system containing a single or multiple active components.

The term "encapsulating material" is meant to encompass any one or more edible water insoluble or soluble materials capable of forming a solid coating or film as a protective barrier around the active component. As understood from the description provided herein, the encapsulating material forms a matrix with the at least one active component whereby the encapsulating material can completely encapsulate at least one active component, can partially encapsulate the at least one active component, or can associate with the at least one active component whereby the encapsulating material provides controlled and/or delayed release of the at least one active component in accordance with the description herein.

As described herein in more detail and as known in the art, chewing gum typically is composed of two parts, a water-insoluble gum base composed of polymeric material and water-soluble ingredients, such as flavors and sweeteners.

An ingredient in an edible composition will have a release profile when a consumer consumes the edible composition. In some embodiments, the ingredient may be released by mechanical action of chewing, and/or by chemical action or reaction of the ingredient with another ingredient or saliva or other material in the consumer's mouth. The release profile for the ingredient is indicative of the availability of the ingredient in the consumer's mouth to interact with receptors (e.g., taste receptors), mucous membranes, teeth, etc. in the consumer's mouth. An edible composition may include the same or different release profiles for different ingredients. In some embodiments, the release profile for only a finite number (e.g., one or two) ingredients may be of primary importance.

The release profile of an ingredient in an edible composition can be influenced by many factors such as, for example, rate of chewing, intensity of chewing, the amount of the ingredient, how the form of the ingredient added to the edible composition (e.g., encapsulated in a delivery system, unencapsulated, pretreated), the edible composition is mixed or otherwise prepared, when or how the ingredient is added to other ingredients in the edible composition, the ratio of the amount of the ingredient to the amount of one or more other ingredients in the edible composition, the ratio of the amount of the ingredient to the amount of one or more other ingredients in a delivery system that is included in the edible composition, etc.

In some embodiments, a release profile for an ingredient may be relate to a specific time period. For example, release of an ingredient from a delivery system may increase during a first time period, reach a peak, and then decrease during a second time period. Thus, in some embodiments, a release profile for an ingredient may include one or more time periods, each of which has an associated release rate (which may or may not be known or measurable). The time periods may be the same length of time or may be different lengths of time. A first time period may have a fixed or varied release rate for the ingredient during the first time period and an average release rate for the ingredient over the first time period. Similarly, a second time period may have a fixed or varied release rate for the ingredient during the second time period and an average release rate for the ingredient over the second time period. In some embodiments, a release profile for an ingredient in an edible composition may include only one time period or be related to only a single point in time, both of which typically relate or are relative to when consumption of the edible composition has started. In other embodiments, a release profile may relate to two or more time periods and/or two or more points in time, all of which typically relate or are relative to when consumption of the edible product has started.

In some embodiments, a release profile may be defined or characterized by one or more factors or characteristics, even if other or all aspects of the release profile are not determined, selected, or even known. Thus, in some embodiments, a release profile for an ingredient may include only one characteristic. For example, characteristics may include one or more of the following: release rate of an ingredient during a time period, a specific time period during which a minimum, average, or predominant amount of an ingredient is released during consumption of an edible composition that includes the ingredient (even if some of the ingredient is released before or after the specific time period and even if the release rate during the time period is not specified or varies), a specific time after which a minimum, average, or predominant amount if an ingredient is released during consumption of an edible composition that includes the ingredient (even if some of the ingredient is released before the specific time and even if the release rates are or are not specified), etc.

In some embodiments, managing a release profile for one or more ingredients may include changing or otherwise managing the starting and ending times for the time periods, changing or otherwise managing the lengths of the time periods, and/or changing or otherwise managing the release rates during the time periods. For example, managing a release profile may include changing or managing a release rate during a time period. An ingredient can be released more quickly or earlier during a first or second time period by increasing its release rate during these time periods. Likewise, the ingredient can be released more slowly or in a more delayed manner during the first or second time periods by decreasing its release rate during these time periods. As another example, managing a release profile may include shifting the start and end of the time periods in the release profile, but the length of the time periods may stay the same and the release rates of the ingredient(s) during the time periods may stay the same (e.g., the release of an ingredient may be managed to delay the release of the predominant amount of the ingredient by one minute, five minutes, ten minutes, thirty minutes, etc.). As a third example, managing a release profile may include shifting the start or end of one or more time periods and changing the release rate within the one or more time periods.

In some embodiments, causing a delay in a release of an ingredient in an edible composition includes causing a delay in the release or availability of the predominant of the ingredient after consumption of the edible product begins and/or causing release or availability of a desired, predominant, or minimum amount of the ingredient at a certain time, after a certain time, or during a desired time period after consumption of the edible composition begins. In some embodiments, none of the ingredient will be released or become available before the certain time or before or after the desired time period. In other embodiments, some of the ingredient may be released or become available before the certain time and/or before or after the desired time period.

In some embodiments, determining or selecting a desired release profile may include determining or selecting one or more factors or characteristics of the desired release profile, as previously described above. The factors or characteristics then serve to define or characterize the release profile, even if other or all aspects of the release profile are not determined or selected. Thus, determining or selecting a release profile for an ingredient can include situations where only one characteristic for the release of the ingredient is determined or selected. In some embodiments, characteristic may be determined or measured by one or more techniques or methods such as, for example, chemical and/or mechanical testing and analysis, consumer testing, descriptive or expert taste or chew panel, other *in vivo* or *in vitro* testing, etc.

One method for measuring characteristics such as sweetness intensity includes the use of sensory evaluation techniques. Sensory evaluation is a scientific discipline used to evoke, measure, analyze and interpret reactions to those characteristics of foods and materials as they are perceived by the senses of sight, smell, taste, touch and hearing. See Page 13, Stone, H. and Sidel, L. (2004) 'Sensory Evaluation Practices', Elsevier Academic Press.

Descriptive analysis is one of the methodologies available to the sensory professional. This analysis provides quantitative descriptions of products, based on the perceptions of a group of qualified subjects.

One descriptive analysis methodology is the Quantitative Descriptive Analysis Method (The QDA Method). The QDA method, as described in Stone, H. and Sidel, L. (2004) 'Sensory Evaluation Practices', Elsevier Academic Press, involves the use of screened subjects are then trained to develop and become familiar with a descriptive language that is used as a basis for scoring the products. The subjects use language as a basis for differentiating the products. To be useful, the language must be easily learned and meaningful in terms of its applications in product development, quality control, in relation to consumer preference measures, and so on. The data generated by the QDA Method is reliable and valid due to the use of quantitative measurements and repeated trials design. An unstructured interval line scale is used because it provides the subject with an infinite number of places in which to indicate the relative intensity for an attribute (within the constraints of the actual length of the line). Numbers are not used thus avoiding number biases, and finally, each subject can mark at whatever location on the line provided the subject is consistent within him or herself.

In a chewing gum comprising at least one of a free sweetener and a coated free sweetener, and at least one of an encapsulated sweetener and a coated encapsulated sweetener, the release profile of the sweetener can be determined and/or selected to optimize the perceived amount of sweetener release over a period of chewing time. While not intended to be a limiting aspect of the invention, the chewing gum components can be selected such that the sweetener release profiles adhere to the following trend: free sweetener > coated free sweetener > encapsulated sweetener > coated encapsulated sweetener. The individual release profiles contribute to the overall release profile of a chewing gum. Depending upon the application, components may be combined in a various proportions in order to obtain a desired sweetener release profile for a desired edible composition.

The present invention is directed generally to a delivery system as defined herein for use in edible compositions, which comprises at least one encapsulating material and at least one active component. The delivery system of the present invention is formulated to provide consistent controlled release of the active component over a preselected period of time, such as an extended period of time. This period of time may vary depending on the type of product in which the delivery system is incorporated, the type of encapsulating material, the type of active, other ingredients (e.g., emulsifiers such as glyceryl monostearate) in the product, etc. One of skill in the art, based on the disclosure herein can adjust the delivery system to achieve the desired effect.

An extended period of time as used herein, relates to an increased release of the active ingredient from the delivery system for over a greater period of time than previously described systems and can be at least 15 minutes, including at least 20 minutes, at least 25 minutes, at least 30 minutes, as well as all values and ranges there between, for example, about 25 to 30 minutes, 45 to 60 minutes or more. Furthermore, the delivery system of the present invention also provides a way to not only deliver active agents over a prolonged period of time but also maintain an increased intensity of the active ingredient over the extended period of time. For example, if the active ingredient is a flavor or sweetener the in one aspect of the invention, the amount of active agent released can vary during the extended period of time. For example, at an early stage of delivery the amount of active component released (based on the total amount present in the delivery system at that time) can be greater than the amount of active component released during subsequent or later periods (based on the total amount present in the delivery system at that time).

In one embodiment, the extended period of time results in retaining at least about 5% of the at least one active component after 30 minutes from the start of delivering the active component in the edible composition, such as the start of chewing a chewing gum composition, including at least about 10%, 15%, 20%, 25%, 30%, or more after 30 minutes. In another embodiment, the extended period of time results in retaining at least about 10% of the at least one active component after 20 minutes from the start of delivering the active component, including at least about 15%, 20%, 25%, 30%, 40%, 50% or more after 20 minutes. In another embodiment, the extended period of time results in retaining at least about 30% of the at least one active component after 15 minutes from the start of delivering the active component, including at least about 30%, 40%, 50%, 60%, 70%, 75% or more after 15 minutes.

In another embodiment, using sweetener in chewing gum as an example, the extended period of time results in a perceived sweetness intensity during at least the entire period of time noted above, e.g., at least about 20 minutes, at least about 30 minutes, etcetera from the start of chewing the chewing gum composition. Moreover, extending the period of time that the sweetener is available during chewing may extend the amount of time that flavor is perceived by the consumer.

The delivery system facilitates the controlled release of the active component in a wide variety of edible compositions including chewing gum compositions, food products, confectionery compositions, pharmaceutical compositions, beverages, foodstuffs, nutrient-containing compositions, vitamins, nutraceuticals and the like.

The delivery system is developed in accordance with the present invention may be selected, depending in part on the active component and the release profile of the desired active component, from a standard of known delivery systems containing the active component with a known release profile. The active components which are part of the delivery system may be selected from sweeteners including high intensity sweeteners, acids, flavorants, pharmaceuticals, therapeutic agents, vitamins, minerals, a tooth whitener or cleaner, breath fresheners, cooling agents, warming agent, a sensate, and other materials that would benefit by coating for protection, controlled release and/or for taste masking. The active components include nicotine useful for the treatment of addiction to tobacco products and caffeine typically found in coffee and/or beverages. In one embodiment of the present invention, the active component is a sweetener, for example a high intensity sweetener such as neotame, aspartame, sucralose, acesulfame potassium, steviosides, monatin, and others as described herein.

In accordance with the present invention that a delivery system for delivering an active component can be formulated to ensure an effective sustained release of the active component based on the type and amount of the active component and desired release profile. For example, it may be desirable to affect the controlled release of a high intensity sweetener over a period of 25 to 30 minutes to ensure against a rapid burst of sweetness that may be offensive to some consumers. A shorter controlled release time may be desirable for other type of active components such as pharmaceuticals or therapeutic agents, which may be incorporated into the same edible composition by using separate delivery systems for each active component. In accordance with the present invention, delivery systems may be formulated based on a range of release profiles relative to a standard. The standard may comprise a series of known delivery systems having, for example, an encapsulating material having specific hydrophobicity and/or tensile strengths over a given range. Each of the delivery systems of the standard will be associated with a particular release profile or ranges of release profiles.

In one embodiment, the present invention includes the incorporation of a plurality of delivery systems to deliver a plurality of separate active components including active components which may be desirably released at distinctly different release profiles, in order to obtain a desired release profile. The active components can be the same or different. Different delivery systems may use different active components and/or different encapsulating materials.

For example, high intensity sweeteners may desirably be released over an extended period of time (e.g. 20 to 40 minutes) while some pharmaceuticals are desirably released over a significantly shorter period of time.

In certain embodiments of the present invention, the delivery system can be prepared such that the release of at least a portion or all of the at least one active agent is at specific rates relative to the time of delivery. For example, in one embodiment, the delivery system can be prepared such that the release of the at least one active agent is released at a rate of 80% over the course of 15 minutes, 90% over the course of 20 minutes, and/or a 95% over the course of 30 minutes. In another embodiment, the delivery system can be prepared such that the one or more active agents are released at a rate of 25 % over the course of 15 minutes, 50% over the course of 20 minutes and/or 75% over the course of 30 minutes. For example, using chewing gum as an example, the same sweetener can be incorporated into two different delivery systems, one of which provides an early release and second providing a more delayed release to contribute to longer lasting perceived sweetness and/or flavor by the consumer.

In one aspect of the present invention, the release profile of the active component can be managed by formulating the delivery system based on the hydrophobicity of the encapsulating material, e.g., polymer. Using highly hydrophobic polymers to form a delivery system, the release of the active component can be delayed during consumption of an edible product that includes the delivery system. In a similar manner, using encapsulating material that is less hydrophobic, the active component can be released earlier or more rapidly.

Hydrophobicity can be quantitated by the relative water-absorption measured according to American Society of Testing Materials in method number ASTM D570-98. Thus, by selecting encapsulating material with relatively lower water-absorption properties and adding that to the mixer, the release of the active component contained in the produced delivery system can be delayed compared to those encapsulating materials having higher water-absorption properties. In certain embodiments, a delivery system with encapsulation material having a water absorption of from about 50 to 100% (as measured according to ASTM D570-98) can be used. To decrease the relative delivery rate of the active component or delay the release of the active component, the encapsulating material can be selected such that the water absorption would be from about 15 to about 50 % (as measured according to ASTM D570-98). Still further, in other embodiments, the water absorption properties of the encapsulating material can be selected to be from 0.0 to about 5% or up to about 15% (as measured according to ASTM D570-98) to create even more delay in the release of the active component.

In other embodiments, mixtures of two or more delivery systems formulated with encapsulating material having different water-absorption properties can also be used in subsequent incorporation into an edible composition. When combining two or more delivery systems, one can manage the release of the active components such that, for example, some of the active is released at an earlier stage during consumption of the edible product containing the same and some of the active is released at a later stage during consumption.

Polymers with suitable hydrophobicity which may be used in the context of the present invention include homo- and co-polymers of, for example, vinyl acetate, vinyl alcohol, ethylene, acrylic acid, methacrylate, methacrylic acid and others. Suitable hydrophobic copolymers include the following non-limiting examples, vinyl acetate/vinyl alcohol copolymer, ethylene/vinyl alcohol copolymer, ethylene/acrylic acid copolymer, ethylene/methacrylate copolymer, ethylene/methacrylic acid copolymer.

In some embodiments, the hydrophobic encapsulating material may be present in amounts of from about 0.2% to 10% by weight based on the total weight of the edible composition, including 0.3, 0.5, 0.7, 0.9, 1.0, 1.25, 1.4, 1.7, 1.9, 2.2, 2.45, 2.75, 3.0, 3.5, 4.0, 4.25, 4.8, 5.0, 5.5, 6.0, 6.5, 7.0, 7.25, 7.75, 8.0, 8.3, 8.7, 9.0, 9.25, 9.5, 9.8 and all values and ranges there between, for example, from 1 % to 5% by weight. The amount of the encapsulating material will, of course, depend in part on the amount of the active component used. The amount of the encapsulating material with respect to the weight of the delivery system, is from about 30% to 99%, including 35, 40, 45, 50, 55, 60, 65, 70, 75, 80, 85, 95, 97 and all values and ranges there between, for example, from about 60% to 90% by weight.

In formulating the delivery system based on the selection criteria of hydrophobicity of the encapsulating material, the active component can be entirely encapsulated within the encapsulating material or incompletely encapsulated within the encapsulating material provided the resulting delivery system meets the criteria set forth hereinabove. The incomplete encapsulation can be accomplished by modifying and/or adjusting the manufacturing process to get partial coverage of the active component. In some embodiments, the encapsulation material may form a matrix with the active component.

For example, if ethylene-vinyl acetate is the encapsulating material, the degree of hydrophobicity can be controlled by adjusting the ratio of ethylene and vinyl acetate in the copolymer. The higher the ethyl ene:vinylacetate ratio, the slower the release of the active component. Using vinyl acetate/ethylene copolymer as an example, the ratio of the vinyl acetate/ethylene in the copolymer can be from about 1 to about 60 %, including ratios of 2.5, 5, 7.5, 9, 12, 18, 23, 25, 28, 30, 35, 42, 47, 52, 55, 58.5 % and all values and ranges there between.

One embodiment of the present invention is a method of selecting a target delivery system containing an active component for an edible composition based on the hydrophobicity of the encapsulating material. The method generally includes preparing a targeted delivery system containing an active component, an encapsulating material and optional additives, with the encapsulating material having a pre-selected hydrophobicity. The hydrophobicity of the encapsulating material employed in the targeted delivery system is pre-selected to provide a desirable release profile of the active component. This selection of the encapsulating material is based on the hydrophobicity of sample delivery systems having the same or similar active component and known release profiles of the active component.

In more preferred another embodiment of the invention, the method comprises (a) obtaining a plurality of sample delivery systems comprising an active component, at least one encapsulating material, and optional additives, wherein each of the delivery systems is prepared with different encapsulating materials having different hydrophobicities; (b) testing the sample delivery systems to determine the respective release profiles of the active component; and (c) formulating a target delivery system containing the same active component with a hydrophobic encapsulating material corresponding to a desired release profile of the active component based on the obtained sample delivery systems.

The method of selecting at least one delivery system suitable for incorporation into an edible composition preferably can begins by determining a desired release profile for an active component (i.e. a first active component). The determination of the desired release profile may be from known literature or technical references or by *in vitro* or *in vivo* testing. Once the desired release profile is determined, the desired hydrophobicity of the encapsulating material can be determined (i.e. a first hydrophobic encapsulating material) for a delivery system (i.e. first delivery system) that can release the first active component at the desired release. Once the delivery system is obtained which can deliver the active component as required it is then selected for eventual inclusion in an edible composition.

The method described above may then be repeated for a second active component and for additional active components as described via the determination and selection of a suitable delivery system.

The edible compositions may contain two or more types of delivery systems, each containing the same or different active components, the selection of delivery systems based on the hydrophobicity of the encapsulating material and/or the tensile strength of the delivery systems as described in the following. Additionally or alternatively, one or more delivery systems may be incorporated into an edible composition with free (non-encapsulated) active components, such as aspartame, steviosides, monatin, sucralose, neotame and ace K sweeteners.

In certain embodiments, owing to the better encapsulation efficiency provided by the present invention, the amount of active, such as sweeteners available for immediate release is reduced due to less free sweetener on the surface of the delivery system. Therefore, in certain embodiments one can add to the edible composition an increased amount of free sweetener to the edible composition, such as chewing gum, to enhance the immediate action of the active upon consumption of the edible composition.

In a further embodiment, the selection of a delivery system, in addition to being based on the hydrophobic character of the encapsulating material, can be selected based on the manipulation and selection of the tensile strength of the encapsulating material to provide a delayed and/or controlled release of the active component. Thus, the controlled and/or delayed release of the active component can be controlled by selecting a predetermined tensile strength and a predetermined hydrophobicity of the encapsulating material.

As used herein, the term "tensile strength" means the maximum stress a material subjected to a stretching load can withstand without tearing. A standard method for measuring tensile strength of a given substance is defined by the American Society of Testing Materials in method number ASTM-D638.

The predetermined tensile strength is determined based, in part, on the active component and the desired release time of the same. The predetermined tensile strength may be selected from a standard comprised of one or more delivery systems with each standard delivery system having a known release profile of the desired active component. The delivery system of the present invention further provides the active component with a protective barrier against moisture and other conditions such as pH changes, reactive compounds and the like, the presence of which can undesirably degrade the active component.

It will be understood that a plurality of delivery systems may be prepared in this manner each containing a different active component by utilizing a comparison with standard delivery systems containing such different active components.

By maintaining the tensile strength of the delivery system within a preselected desirable range, the active component is released from the composition in a highly controlled and consistent manner. By focusing on the tensile strength of the delivery system, the process for selecting and formulating suitable delivery systems is enhanced in a manner which effectively reduces the need for trial and error experimentation typically necessary in prior art systems.

The desired tensile strength of the delivery system can be readily determined within a desired range. In one embodiment of the present invention, the tensile strength of the delivery system is at least 6,500 psi, including 7500, 10,000, 20,000, 30,000, 40,000, 50,000, 60,000, 70,000, 80,000, 90,000, 100,000, 125,000, 135,000, 150,000, 165,000, 175,000, 180,000, 195,000, and 200,000 psi, and all ranges and subranges there between, for example a tensile strength range of 6,500 to 200,000 psi. The formulation of a delivery system with a desirable tensile strength can be made from a variety of encapsulating materials and at least one additive which hereinafter are referred to as "at least one tensile strength modifying agent or modifier." The at least one additive may be used to formulate the delivery system by modifying the tensile strength of the delivery system, including tensile strength-lowering materials such as fats, emulsifiers, plasticizers (softeners), waxes, low molecular weight polymers, and the like, in addition to tensile strength increasing materials such as high molecular weight polymers. In addition, the tensile strength of the delivery system can also be fine tuned by combining different tensile strength modifiers to form the delivery system. For example, the tensile strength of high molecular weight polymers such as polyvinyl acetate may be reduced when tensile strength lowering agents such as fats and/or oils are added.

In one embodiment of the present invention, at least one tensile strength modifying agent is present in the delivery system in an amount sufficient such that the release of the one or more active agents, wholly or partly, contained in the delivery system is released at a rate of 80% over the course of 15 minutes, 90% over the course of 20 minutes, and/or a 95% over the course of 30 minutes. In another embodiment, the at least one tensile strength modifying agent is present in the delivery system in an amount sufficient such that the one or more active agents are released at a rate of 25 % over the course of 15 minutes, 50% over the course of 20 minutes and/or 75% over the course of 30 minutes.

In another embodiment of the present invention, the at least one tensile strength modifying agent is present in the delivery system in an amount sufficient such that the tensile strength of the delivery system is at least about 6,500 psi, including 7500, 10,000, 20,000, 30,000, 40,000, 50,000, 60,000,70,000, 80,000, 90,000, 100,000, 125,000, 135,000, 150,000, 165,000, 175,000, 180,000, 195,000, 200,000 psi, and all ranges and subranges there between, for example a tensile strength range of 6,500 to 200,000 psi.

Examples of tensile strength modifiers or modifying agents include, but are not limited to, fats (e.g., hydrogenated or non-hydrogenated vegetable oils, animal fats), waxes (e.g., microcrystalline wax, bees wax), plasticizers/emulsifiers (e.g., mineral oil, fatty acids, mono- and diglycerides, triacetin, glycerin, acetylated monoglycerides, glycerol monostearate), low and high molecular weight polymers (e.g., polypropylene glycol, polyethylene glycol, polyisobutylene, polyethylene, polyvinyl acetate) and the like, fillers like talc, dicalcium phosphate, calcium carbonate, silica, and combinations thereof. Plasticizers may also be referred to as softeners.

Thus, by employing tensile strength modifiers, the overall tensile strength of the delivery system can be adjusted or altered in such a way that a preselected tensile strength is obtained for the corresponding desired release profile of the active component from an edible composition based on a comparison with a standard.

The delivery systems of the present invention produce controlled release of the active components as desired through the use of a preselected tensile strength when matched with a desirable release profile selected according to the type of the active components used, the encapsulating material used, the additives incorporated, the desired rate of release of the active component, and the like. The encapsulating materials used for the delivery systems are generally selected from edible water insoluble materials capable of forming a solid coating or film as a protective barrier around the active component. The encapsulating material is chosen in a manner consistent with the tensile strength of the delivery system which can be at least 6,500 psi, including 7500, 10,000, 20,000, 30,000, 40,000, 50,000, 60,000, 70,000, 80,000, 90,000, 100,000, 125,000, 135,000, 150,000, 165,000, 175,000, 180,000, 195,000, 200,000 psi, and all ranges and subranges there between, for example a tensile strength range of 6,500 to 200,000 psi. Such encapsulating materials may be selected from polyvinyl acetate, polyethylene, crosslinked polyvinyl pyrrolidone, polymethylmethacrylate, polylactic acid, polyhydroxyalkanoates, ethylcellulose, polyvinyl acetatephthalate, polyethylene glycol esters, methacrylicacid-co-methylmethacrylate, and the like, and combinations thereof.

The encapsulating material, based on the selection of hydrophobicity of the encapsulating material and the tensile strength of the delivery system, may be present in amounts of from about 0.2% to 30% by weight based on the total weight of the edible composition, including 0.3, 0.5, 0.7, 0.9, 1.0, 1.25, 1.4, 1.7, 1.9, 2.2, 2.45, 2.75, 3.0, 3.5, 4.0, 4.25, 4.8, 5.0, 5.5, 6.0, 6.5, 7.0, 7.25, 7.75, 8.0, 8.3, 8.7, 9.0, 9.25, 9.5, 9.8 12, 14, 15, 18, 21, 24, 26, 28 and all values and ranges there between, for example, from 1% to 5% by weight. The amount of the encapsulating material will, of course, depend in part on the amount of the active component present in the delivery system. The amount of the encapsulating material with respect to the weight of the delivery system, is from about 30% to 99%, including 35, 40, 45, 50, 55, 60, 65, 70,75, 80, 85, 95, 97 and all values and ranges there between, for example, from about 60% to 90% by weight.

The tensile strength of the delivery system may be selected from relatively high tensile strengths when a relatively slower or delay release is desired and relatively lower tensile strengths when a faster or quicker release is desired. Thus, when employing a tensile strength of 50,000 for a delivery system, the release profile of the active component, will generally be delayed in comparison to the release profile of the active component in a delivery system having a tensile strength of 10,000 psi regardless of the type of encapsulating material (e.g., polyvinyl acetate) chosen as long as the hydrophobicity of the encapsulations is kept consistently similar or identical.

In one embodiment of the present invention, the encapsulating material is polyvinyl acetate. A representative example of a polyvinyl acetate product suitable for use as an encapsulating material in the present invention is Vinnapas B100 sold by Wacker Polymer Systems of Adrian, Michigan. A delivery system utilizing polyvinyl acetate may be prepared by melting a sufficient amount of polyvinyl acetate at a temperature of about 65°C to 120°C for a short period of time, e.g., 5 minutes. The melt temperature will depend on the type and tensile strength of the polyvinyl acetate encapsulating material where higher tensile strength materials will generally melt at higher temperatures. Once the encapsulating material is melted, a suitable amount of the active component (e.g., high intensity sweetener such as aspartame) is added and blended into the molten mass thoroughly for an additional short period of mixing. The resulting mixture is a semi-solid mass, which is then cooled (e.g., at 0°C) to obtain a solid, and then ground to a U.S. Standard sieve size of from about 30 to 200 (900 pm to 75 µm). The tensile strength of the resulting delivery system can readily be tested according to ASTM-D638 after molding the encapsulations in required size and shape.

The selection of a suitable encapsulating material will also depend in part on the type and amount of the active component and the presence of other additives or ingredients. Plasticizers or softeners as well as fats and oils, for example, act as "tensile strength modifying agents" and may be incorporated into the delivery system and particularly into the encapsulating material to modify the tensile strength of the resulting delivery system. The above-mentioned additives may be added to the encapsulating material during the molten state. The amount of additives used in the delivery system of the present invention will of course vary according to the desired tensile strength can range up to 40% by weight based on the total weight of the delivery system.

In formulating the delivery system to have a predetermined tensile strength and a preselected hydrophobic encapsulating material, the active component can be entirely encapsulated within the encapsulating material or incompletely encapsulated within the encapsulating material provided the resulting tensile strength of the delivery system meets the criteria set forth hereinabove. The incomplete encapsulation can be accomplished by modifying and/or adjusting the manufacturing process to get partial coverage of the active component.

The presence of fats and oils (e.g., hydrogenated vegetable oil) as an additive has been found to have two effects on the delivery system. The first effect is observed at lower concentrations, i.e. up to 5% by weight, including up to 4.7, up to 4.5, up to 4.25, up to 4.0, up to 3.5, up to 3.0, up to 2.5, up to 2.25, up to 2.0, up to 1.75, up to 1.5, up to 1.0 and all values and ranges there between, wherein the fats and/or oils either maintain or increase the tensile strength of the delivery system. At higher concentrations (i.e., typically above 5% by weight), the fats and/or oils tend to reduce the tensile strength of the delivery system. Even with such unusual or non-linear effects on the tensile strength of the delivery system, a suitable delivery system with the desired release of the active component may be readily formulated in accordance with the present invention because the targeted delivery system is prepared based on sample delivery systems having known release profiles for the active component.

In one embodiment of the present invention, there is provided a method of selecting a target delivery system containing an active component for an edible composition based on the hydrophobicity of the encapsulating material and the tensile strength of the delivery system. The method generally includes preparing a targeted delivery system containing an active component, an encapsulating material and optional additives, with the encapsulating material having a pre-selected hydrophobicity and the targeted delivery system having a pre-selected tensile strength. The tensile strength of the targeted delivery system and the hydrophobicity of the encapsulating material are pre-selected to provide a desirable release profile of the active component. This selection of the tensile strength is based on the tensile strengths of sample delivery systems having the same or similar active component and known release profiles of the active component. Likewise, the selection of the encapsulating material is based on the hydrophobicity of sample delivery systems having the same or similar active component and known release profiles of the active component.

In another embodiment of the invention, the method comprises the steps of (a) obtaining a plurality of sample delivery systems comprising an active component, at least one encapsulating material, and optional additives, wherein each of the delivery systems has a different tensile strength and encapsulating material having a different hydrophobicity; (b) testing the sample delivery systems to determine the respective release profiles of the active component; and (c) formulating a target delivery system containing the same active component with a tensile strength and hydrophobicity of the encapsulating material corresponding to a desired release profile of the active component based on the obtained sample delivery systems.

The method of selecting at least one delivery system suitable for incorporation into an edible composition can begin by determining a desired release profile for an active component (i.e., a first active component). The determination of the desired release profile may be from known literature or technical references or by *in vitro* or *in vivo* testing. Once the desired release profile is determined, it is typical to determine the desired tensile strength and the desired hydrophobicity of the encapsulating material for a delivery system that can release the first active component at a desired release profile. Once the delivery system is obtained which can deliver the active component as required it is then selected for eventual inclusion in an edible composition.

The method described above may then be repeated for a second active component and for additional active components as described via the determination and selection of a suitable delivery system.

One of the desirable properties of solid dosage forms, such as an edible composition or a chewing gum, is that release of the active component, such as a sweetener, can be uniform throughout the chew time. For example, with free (non- encapsulated) sweeteners, the release is quick and the taste of gum is not desirable at the late chewing time. With delivery systems having a high tensile strength, the release is delayed so that the sweetener releases late in chewing time. To balance early and late release of the active components, for example, an edible composition can be manufactured so that it contains a mixture of free actives with delivery systems having high tensile strength and/or hydrophobicity and/or combinations of two or more delivery systems having different tensile strength and/or hydrophobicities designed such that the active component is released at different rates.

For example, an edible composition such as a chewing gum composition can contain a sweetener, e.g., aspartame, in both free form (non-encapsulated) and in one or more delivery systems having a tensile strength of at least 6,500 psi, with increasing tensile strength creating a more delayed release profile of the sweetener. Alternatively or in combination with the tensile strength, the delivery system can have water retention of at least 50%.

Another example of an edible composition can incorporate two or even several delivery systems whereby one delivery system is prepared to have a tensile strength of about 6,500 psi and a second delivery system to have a tensile strength of about 50,000 psi. Non-encapsulated (free) active can also be included to provide an initial rapid release of the active. In addition to or as an alternative, the edible composition can be prepared such that the first delivery system has water retention value of about 5 to 15 % and the second delivery system has a water retention value of 50 to 100%.

In this manner, the selection of a delivery system can be based on the manipulation and selection of the proportion of the amount of the at least one non-encapsulated active component to the amount of at least one encapsulated material having a desired parameter and/or characteristic to provide a delayed and/or controlled release of the active component. Such that the composition will release the active at both an early stage of 0 to 10 minutes or later stages 15-30 minutes as well as combinations of these times, including all values and subranges there between.

For typical edible compositions including chewing gum compositions, confectionery compositions and beverage compositions, the non-encapsulated and non- encapsulated active components (e.g., sweeteners) may be present in amounts of from about 0.1 % to 6% by weight based on the total weight of the edible composition, including 0.5, 1, 2, 3, 4, 5% by weight and all values and subranges there between, for example, 0.5% to 3% by weight.

In some instances, some of the active components in the delivery system may be miscible with the encapsulating material. For example, polyvinyl acetate is one type of encapsulating material that can be used in the present invention. Some components, such as flavor which are short or medium chain esters, may interact with the polyvinyl acetate (PVAc) and thereby reduce the effectiveness of the controlled and/or delayed release profile of the active component.

Therefore, one embodiment of the present invention, by itself or combined with the other embodiments described herein, is coating the active component with a "coating material" that is not miscible or at least less miscible relative to its miscibility with the encapsulating material. The active component can be coated with the coating material prior to or concurrently with its encapsulation with the encapsulating material.

The coating material according to the present invention can reduce the miscibility of the active component with the encapsulating material at least 5%, preferably at least 25%, more preferably at least 50%, including, 10, 15, 20, 30, 40, 60, 70, 75, 80, 85, 90, 95% or more relative to the miscibility of the active component which is not coated by the coating material.

In one embodiment, the material used to coat the active component is a water soluble and/or hydrophilic material. Non-limiting examples of suitable coating materials include, gum Arabic, cellulose, modified cellulose, gelatin, polyols (e.g., sorbitol, maltitol), cyclodextrin, zein, polyvinyl alcohol, polymethylmethacrylate, and polyurethane. Mixtures of various coating materials may also be used.

The coating thickness will vary depending on starting particle size and shape of the active material as well as the desired weight percent coating level. In accordance with the present invention, the coating thickness is preferably from about 1 µm to about 200 µm, including 10, 20, 30, 40, 50, 60, 70, 80, 90, 100, 110, 120, 130, 140, 150, 160, 170, 180 and 190 µm and all values and ranges there between, for example, the thickness of coating material can be from about 10 µm to about 50 µm and 20 to 54 % by weight.

In addition to providing a barrier stability that can reduce and/or eliminate the miscibility of the active component, the coating material used in the present invention may also have good film forming properties that facilitates the formation of a barrier between the active component and the encapsulating material. Film forming properties as used herein means that the coating material, after dissolution in at least one solvent (such as, for example, water and/or organic solvents), leaves a film on the active component to which it is applied, for example, once the at least one solvent evaporates, absorbs and/or dissipates on the active component. Furthermore, when the coating material is used in the preparation of edible compositions, such as chewing gum, one of ordinary skill in the art recognizes that the coating material should be chosen based on its taste, shelf life, stickiness, resistance to microbial growth, and other common criteria for selecting ingredients for consumption.

The active component can be coated with the coating material by applying the coating material to the active component using a pan, spray, batch, and/or continuous processes typically used to coat materials. In one embodiment, the coating material is dissolved or dispersed in a solvent to facilitate coating on the active component. The coating material can be delivered using conventional methods of coating substrates. In a preferred method of coating, a fluidized bed technique is employed which is described, for example, in U.S. Patent No. 3,196,827.

In a further embodiment, by coating the active component and encapsulating the active component according to the description provided herein, a longer shelf life of the edible compositions can be attained. As used herein, shelf life is an indicia of the stability of the components of the edible compositions containing the active component. Using flavorants and/or sweeteners for illustration, this increase in shelf life can be assessed by determining the perceived flavor and/or sweetness of the flavorant and/or sweetener contained in the composition. According to the present invention, when using a coating material to coat the active component a 5% increase in shelf life relative to a similar product in which the active component has not been coated with the barrier material can be achieved, including 10, 20, 30, 40, 50, 60, 70, 80, 90, 100% or more, as well as all values and ranges there between, increased shelf life. In another embodiment, the longer shelf life can be correlated to the time of storage after manufacture, for example at 10 weeks the shelf life the composition containing the coated active component will demonstrate a 50%, 75%, 80%, or 90% improvement relative to a similar composition but not containing an active component coated with a coating material according to the invention described herein. In a further example, at 24 weeks of storage, the coated active component will show an 80 to 90% improvement relative to a similar composition but not containing the active component coated with a coating material as according to the invention described herein.

In another embodiment of the present invention, a delivery system may be employed which is coated with a "coating material" to provide a delayed and/or controlled release of the active component. The coating material can partially or wholly coat the delivery system. Thus, the controlled and/or delayed release of the active component can be controlled by selecting an amount of coating material to coat the delivery system. It is also understood that the controlled and/or delayed release of the active component can be controlled by selecting a tensile strength, a hydrophobicity of the encapsulating material, and a amount of coated delivery systems as described herein.

The material coating the delivery system may be present in an amount that ranges from about 10 wt% to about 60 wt%, preferably about 20 wt% to about 50 wt%, more preferably about 30 wt% to about 40 wt%, and most preferably about 35 wt%, 15, 20, 25, 30, 35, 40, 45, 50, and 55 wt%, and all values and ranges there between, based on the total weight of the delivery system.

In one embodiment, the material used to coat the delivery system is a water soluble and/or hydrophilic material. Non-limiting examples of suitable coating materials include, gum Arabic, cellulose, modified cellulose, gelatin, polyols (e.g., sorbitol, maltitol), cyclodextrin, zein, polyvinyl alcohol, polymethylmethacrylate, and polyurethane. Mixtures of various coating materials may also be used.

The coating thickness will vary depending on starting size and shape of the particles comprising the encapsulating material as well as the desired weight percent coating level. In accordance with the present invention, the coating thickness is can be from about 1 to about 200 µm, including 10, 20, 30, 40, 50, 60, 70, 80, 90, 100, 110, 120, 130, 140, 150, 160, 170, 180 and 190 µm and all values and ranges there between, for example, the thickness of coating material can be from about 10 to about 50 µm and 9% to 40 % by weight, based on the total weight of the delivery system.

The material used to coat the delivery system may also have good film forming properties. Film forming properties as used herein means that the coating material, after dissolution in at least one solvent (such as, for example, water and/or organic solvents), leaves a film on the particles comprising the encapsulating material to which it is applied, for example, once the at least one solvent evaporates, absorbs and/or dissipates on the particles comprising the encapsulating material. Furthermore, when the coating material is used in the preparation of edible compositions, such as chewing gum, one of ordinary skill in the art recognizes that the coating material should be chosen based on its taste, shelf life, stickiness, resistance to microbial growth, and other common criteria for selecting ingredients for consumption.

The delivery system can be coated with the coating material by applying the coating material to particles of the encapsulating material using a pan, spray, batch, and/or continuous processes typically used to coat materials. In one embodiment, the coating material is dissolved or dispersed in a solvent to facilitate coating of the delivery system. The coating material can be delivered using conventional methods of coating substrates. In a preferred method of coating, a fluidized bed technique is employed which is described, for example, in U.S. Patent No. 3,196,827.

In a further embodiment, by coating the delivery system, a longer shelf life of the edible compositions can be attained. As used herein, shelf life is an indicia of the stability of the components of the edible compositions containing the active component. Using flavorants and/or sweeteners for illustration, this increase in shelf life can be assessed by determining the perceived flavor and/or sweetness of the flavorant and/or sweetener contained in the composition. When using a coating material to coat the delivery system a 5% increase in shelf life relative to a similar product which have not be coated can be achieved, including 10, 20, 30, 40, 50, 60, 70, 80, 90, 100% or more, as well as all values and ranges there between, increased shelf life. In another embodiment, the longer shelf life can be correlated to the time of storage after manufacture, for example at 10 weeks the shelf life the composition containing the coated delivery system can demonstrate a 50%, 75%, 80%, or 90% improvement relative to a similar composition but not containing the coated delivery systems. In a further example, at 24 weeks of storage, the coated delivery system can show an 80 to 90% improvement relative to a similar composition but not containing the coated delivery system.

In another embodiment of the present invention, a delivery system may be employed in which the release of the active component can be controlled by selecting the proportion of at least one active component relative to the encapsulating material. In this embodiment, it has been discovered that delivery systems with higher ratios of active component to encapsulating material(s) results in a faster release of the active compared to lower ratios of active component and encapsulating material.

Also in combination with one or more of the other embodiments described herein, by adjusting the ratio of the active component and the delivery system, one can achieve a controlled and/or delayed release of the active component over a period of time.

The amount of the encapsulating material with respect to the weight of the delivery system, can be from about 30% to 99%, including 35, 40, 45, 50, 55, 60, 65, 70, 75, 80, 85, 95, 97 and all values and ranges there between, for example, preferably about 45 wt% to about 95 wt%, more preferably about 60 wt% to about 95 wt%, and most preferably about 65 wt% to about 90 wt% while the active components may be present in amounts of from about 1 % to 70% by weight based on the total weight of the delivery system, including 5, 10, 15, 20, 25, 30, 35, 40, 45, 50, 55, 60, 65% by weight, and all values and ranges there between, for example, preferably about 5 wt% to about 55 wt%, more preferably about 5 wt% to about 40 wt%, and most preferably about 10 wt% to about 35 wt% based on the total weight of the delivery system. Thus, the ratio of the active to the encapsulating material can range from 1:99 to 70:30, including 3:97, 10:90, 15:85, 20:80, 25:75, 30:70, 40:60, 50:50, 55:45, and 60:40 as well as all ratios there between.

The at least one active component incorporated into the delivery system manufactured according to the processes described herein include, for example, a sweetener, such as a high-intensity sweetener, an acid, e.g., a food grade acid, a flavorant, a pharmaceutical, a therapeutic agent, a vitamin, a mineral, a breath freshener, a tooth whitener or cleaner, a cooling agent, a warming agent, a sensate, throat-soothing agents, spices, caffeine, drugs, etc. Combinations of these active components can be included in the same or different delivery systems. Such components may be used in amounts sufficient to achieve their intended effects.

A variety of well known cooling agents may be employed. For example, among the useful cooling agents are included menthol, xylitol, menthane, menthone, ketals, menthone ketals, menthone glycerol ketals, substituted p-menthanes, acyclic carboxamides, substituted cyclohexanamides, substituted cyclohexane carboxamides, substituted ureas and sulfonamides, substituted menthanols, hydroxymethyl and hydroxymethyl derivatives of p-menthane, 2-mercapto-cyclo-decanone, 2-isopropanyl-5-methylcyclohexanol, hydroxycarboxylic acids with 2-6 carbon atoms, cyclohexanamides, menthyl acetate, menthyl lactate, menthyl salicylate, N,N 2,3-trimethyl-2-isopropyl butanamide (WS-23), N-ethyl-p-menthane-3-carboxamide (WS-3), menthyl succinate, 3,1 -menthoxypropane 1,2-diol, among others. Combinations of cooling agents may also be used. These and other suitable cooling agents are further described in the following U.S. Patents 4,230,688; 4,032,661; 4,459,425; 4,136,163; 5,266,592; 6,627,233.

Examples of food grade acids which can be used include acetic acid, adipic acid, ascorbic acid, butyric acid, citric acid, formic acid, fumaric acid, glyconic acid, lactic acid, phosphoric acid, malic acid, oxalic acid, succinic acid, tartaric acid and others. Combinations of food grade acids may also be used.

Warming components may be selected from a wide variety of compounds known to provide the sensory signal of warming to the user. These compounds offer the perceived sensation of warmth, particularly in the oral cavity, and often enhance the perception of flavors, sweeteners and other organoleptic components. Among the useful warming compounds included are vanillyl alcohol n-butylether (TK-1000) supplied by Takasago Perfurnary Company Limited, Tokyo, Japan, vanillyl alcohol n-propylether, vanillyl alcohol isopropylether, vanillyl alcohol isobutylether, vanillyl alcohol n-aminoether, vanillyl alcohol isoamylether, vanillyl alcohol n-hexylether, vanillyl alcohol methylether, vanillyl alcohol ethylether, gingerol, shogaol, paradol, zingerone, capsaicin, dihydrocapsaicin, nordihydrocapsaicin, homocapsaicin, homodihydrocapsaicin, ethanol, isopropyl alcohol, isoamyl alcohol, benzyl alcohol, glycerine, and combinations thereof.

The sensation of warming or cooling effects may be prolonged with the use of a hydrophobic sweetener as described in U.S. Patent Application Publication 200310072842 A1. For example, such hydrophobic sweeteners include those of the formulae I-XI referenced therein. Perillartine may also be added as described in U.S. Patent No. 6,159,509.

The breath freshening agents may include in addition to the flavors and cooling agents described hereinabove, a variety of compositions with odor controlling properties.
These may include, without limitation, cyclodextrin and magnolia bark extract. The breath freshening agents may further be encapsulated to provide a prolonged breath freshening effect. Examples of malodor-controlling compositions are included in U.S. Patent No. 5,300,305 to Stapler et al. and in U.S. Patent Application Publication Nos. 20031021 5417 and 20041008 17 13.

As described above, a variety of oral care products may also be included in some embodiments of chewing gums. These may include tooth whiteners, stain removers and anticalculus agents. Examples of these include, but are not limited to hydrolytic agents including proteolytic enzymes, abrasives such as hydrated silica, calcium carbonate, sodium bicarbonate and alumina, other active stain-removing components such as surface-active agents, such as anionic surfactants such as sodium stearate, sodium palminate, sulfated butyl oleate, sodium oleate, salts of fumaric acid, glycerol, hydroxylated lecithin, sodium lauryl sulfate and chelators such as polyphosphates, which are typically employed in dentifrice compositions as tartar control ingredients. Also included are tetrasodium pyrophosphate and sodium tripolyphosphate, xylitol, hexametaphosphate, and an abrasive silica. Further examples are included in the following U.S. Patents: U. S. Patent Nos. 5,227,154, 5,378,131 and 6,685,916.

A variety of drugs, including medications, herbs, and nutritional supplements may also be included in the gum formulations. Examples of useful drugs include ACE-inhibitors, antianginal drugs, anti-arrhythmias, anti-asthmatics, anti-cholesterolemics, analgesics, anesthetics, anti-convulsants, anti-depressants, anti-diabetic agents, anti-diarrhea preparations, antidotes, anti-histamines, anti-hypertensive drugs, anti-inflammatory agents, anti-lipid agents, anti-manics, anti-nauseants, anti-stroke agents, anti-thyroid preparations, anti-tumor drugs, anti-viral agents, acne drugs, alkaloids, amino acid preparations, anti-tussives, anti-uricemic drugs, anti-viral drugs, anabolic preparations, systemic and non-systemic anti-infective agents, anti-neoplastics, anti-parkinsonian agents, anti-rheumatic agents, appetite stimulants, biological response modifiers, blood modifiers, bone metabolism regulators, cardiovascular agents, central nervous system stimulates, cholinesterase inhibitors, contraceptives, decongestants, dietary supplements, dopamine receptor agonists, endometriosis management agents, enzymes, erectile dysfunction therapies such as sildenafil citrate, which is currently marketed as Viagra B, fertility agents, gastrointestinal agents, homeopathic remedies, hormones, hypercalcemia and hypocalcemia management agents, immunomodulators, immunosuppressives, migraine preparations, motion sickness treatments, muscle relaxants, obesity management agents, osteoporosis preparations, oxytocins, parasympatholytics, parasympathomimetics, prostaglandins, psychotherapeutic agents, respiratory agents, sedatives, smoking cessation aids such as bromocryptine or nicotine, sympatholytics, tremor preparations, urinary tract agents, vasodilators, laxatives, antacids, ion exchange resins, anti-pyretics, appetite suppressants, expectorants, anti-anxiety agents, antiulcer agents, anti-inflammatory substances, coronary dilators, cerebral dilators, peripheral vasodilators, psycho-tropics, stimulants, anti-hypertensive drugs, vasoconstrictors, migraine treatments, antibiotics, tranquilizers, anti-psychotics, anti-tumor drugs, anti-coagulants, antithrombotic drugs, hypnotics, anti-emetics, anti-nauseants, anti-convulsants, neuromuscular drugs, hyper- and hypo-glycemic agents, thyroid and anti-thyroid preparations, diuretics, anti-spasmodics, terine relaxants, anti-obesity drugs, erythropoietic drugs, anti-asthmatics, cough suppressants, mucolytics, DNA and genetic modifying drugs, and combinations thereof.

Examples of other active ingredients include antacids, H2-antagonists, and analgesics. For example, antacid dosages can be prepared using the ingredients calcium carbonate alone or in combination with magnesium hydroxide, and/or aluminum hydroxide. Moreover, antacids can be used in combination with H2-antagonists. Active antacid ingredients include, but are not limited to, aluminum hydroxide, dihydroxyaluminum aminoacetate, aminoacetic acid, aluminum phosphate, dihydroxyaluminum sodium carbonate, bicarbonate, bismuth aluminate, bismuth carbonate, bismuth subcarbonate, bismuth subgallate, bismuth subnitrate, bismuth subsilysilate, calcium carbonate, calcium phosphate, citrate ion (acid or salt), amino acetic acid, hydrate magnesium aluminate sulfate, magaldrate, magnesium aluminosilicate, magnesium carbonate, magnesium glycinate, magnesium hydroxide, magnesium oxide, magnesium trisilicate, milk solids, aluminum mono-ordibasic calcium phosphate, tricalcium phosphate, potassium bicarbonate, sodium tartrate, sodium bicarbonate, magnesium aluminosilicates, tartaric acids and salts.

Analgesics include opiates and opiate derivatives, such as OXYCONTIN®, ibuprofen, aspirin, acetaminophen, and combinations thereof that may optionally include caffeine.

Other drug ingredients for use in embodiments include anti-diarrheals such as immodium AD, anti-histamines, anti-tussives, decongestants, vitamins, and breath fresheners. Also contemplated for use herein are anxiolytics such as XANAX®; anti-psychotics such as clozaril and Haldol; non-steroidal anti-inflammatories (NSAID1s) such as ibuprofen, naproxen sodium, VOLTAREN® and LODINH®, anti-histamines such as CLARITIN®, HISMANAL®, RELAFEN®, and TAVIST®; anti-emetics such as IWTRIL® and CESAMET®; bronchodilators such as BENTOLIN®, PROVENTIL®; anti-depressants such as PROZAC®, ZOLOFT®, and PAXIL®; anti-migraines such as IMIGRA®, ACE-inhibitors such as Vasotec, Capoten and Zestril; anti-Alzheimer's agents, such as Nicergoline; and CaH-antagonists such as PROCARDLA®, ADALAT®, and Calan.

H2-antagonists which can be used include cimetidine, ranitidine hydrochloride, famotidine, nizatidien, ebrotidine, mifentidine, roxatidine, pisatidine and aceroxatidine.

A variety of other nutritional supplements may also be included, such as vitamin or mineral as mentioned above. For example, vitamin A, vitamin C, vitamin D, vitamin E, vitamin K, vitamin B6, vitamin B 12, thiamine, riboflavin, biotin, folic acid, niacin, pantothenic acid, sodium, potassium, calcium, magnesium, phosphorus, sulfur, chlorine, iron, copper, iodine, zinc, selenium, manganese, choline, chromium, molybdenum, fluorine, cobalt and combinations thereof, may be used.

Examples of nutritional supplements are set forth in U.S. Patent Application Publication Nos. 2003/0157213 A1, 2003/0206993 and 2003/0099741 A1.

Various herbs may also be included such as those with various medicinal or dietary supplement properties. Herbs are generally aromatic plants or plant parts that can be used medicinally or for flavoring. Suitable herbs can be used singly or in various mixtures. Examples include Echinacea, Goldenseal, Calendula, Aloe, Blood Root, Grapefruit Seed Extract, Black Cohosh, Cranberry, Ginko Biloba, St. John's Wort, Evening Primrose Oil, Yohimbe Bark, Green Tea, Maca, Bilberry, Lutein, and combinations thereof.

Flavorants which may be used include those flavors known to the skilled artisan, such as natural and artificial flavors. These flavorings may be chosen from synthetic flavor oils and flavoring aromatics and/or oils, oleoresins and extracts derived from plants, leaves, flowers, fruits, and so forth, and combinations thereof. Nonlimiting representative flavor oils include spearmint oil, cinnamon oil, oil of wintergreen (methyl salicylate), peppermint oil, clove oil, bay oil, anise oil, eucalyptus oil, thyme oil, cedar leaf oil, oil of nutmeg, allspice, oil of sage, mace, oil of bitter almonds, and cassia oil. Also useful flavorings are artificial, natural and synthetic hit flavors such as vanilla, and citrus oils including lemon, orange, lime, grapefruit, and fruit essences including apple, pear, peach, grape, blueberry, strawberry, raspberry, cherry, plum, pineapple, apricot and so forth. These flavoring agents may be used in liquid or solid form and may be used individually or in admixture. Commonly used flavors include mints such as peppermint, menthol, spearmint, artificial vanilla, cinnamon derivatives, and various fruit flavors, whether employed individually or in admixture. Flavors may also provide breath freshening properties, particularly the mint flavors when used in combination with the cooling agents, described herein below.

Other useful flavorings include aldehydes and esters such as cinnamyl acetate, cinnamaldehyde, citral diethylacetal, dihydrocanyl acetate, eugenyl formate, p-methylamisol, and so forth may be used. Generally any flavoring or food additive such as those described in Chemicals Used in Food Processing, publication 1274, pages 63-258, by the National Academy of Sciences, may be used. This may include natural as well as synthetic flavors.

Further examples of aldehyde flavorings include but are not limited to acetaldehyde (apple), benzaldehyde (cherry, almond), anisic aldehyde (licorice, anise), cinnamic aldehyde (cinnamon), citral, i.e., alpha-citral (lemon, lime), neral, i.e., beta-citral (lemon, lime), decanal (orange, lemon), ethyl vanillin (vanilla, cream), heliotrope, i.e., piperonal (vanilla, cream), vanillin (vanilla, cream), alpha-amyl cinnamaldehyde (spicy fruity flavors), butyraldehyde (butter, cheese), valeraldehyde (butter, cheese), citronellal (modifies, many types), decanal (citrus hits), aldehyde C-8 (citrus fruits), aldehyde C-9 (citrus fruits), aldehyde C-12 (citrus hits), 2-ethyl butyraldehyde (berry fruits), hexenal, i.e., trans-2 (berry fruits), tolyl aldehyde (cherry, almond), veratraldehyde (vanilla), 2,6-dimethyl-5-heptenal, i.e., melonal (melon), 2,6-dimethyloctanal (green fruit), and 2-dodecenal (citrus, mandarin), cherry, grape, blueberry, blackberry, strawberry shortcake, and mixtures thereof.

The sweeteners used may be selected from a wide range of materials including water-soluble sweeteners, water-soluble artificial sweeteners, water-soluble sweeteners derived from naturally occurring water-soluble sweeteners, dipeptide based sweeteners, and protein based sweeteners, including mixtures thereof. Without being limited to particular sweeteners, representative categories and examples include: (a) water-soluble sweetening agents such as dihydrochalcones, monellin, steviosides, glycyrrhizin, dihydroflavenol, and sugar alcohols such as sorbitol, mannitol, maltitol, and L- aminodicarboxylic acid aminoalkenoic acid ester amides, such as those disclosed in U.S. Patent No. 4,619,834, and mixtures thereof; (b) water-soluble artificial sweeteners such as soluble saccharin salts, i.e., sodium or calcium saccharin salts, cyclamate salts, acesulfame salts, such as the sodium, ammonium or calcium salt of 3,4-dihydro-6-methyl-1,2,3-oxathiazine-4-one-2,2-dioxide, the potassium salt of 3,4-dihydro-6-methyl-1,2,3-oxathiazine-4-one-2,2-dioxide (Acesulfame-K), the free acid form of saccharin, and mixtures thereof; (c) dipeptide based sweeteners, such as L-aspartic acid derived sweeteners, such as L-aspartyl-L- phenylalanine methyl ester (Aspartame) and materials described in U.S. Pat. No. 3,492,131, L-alpha aspartyl-N-(2,2,4,4-tetramethyl-3-thietanyl)-D-alaninamide hydrate (Alitame), methyl esters of L-aspartyl-L-phenyl glycerine and L-aspartyl-L-2,5 - dihydrophenyl-glycine, L-aspartyl-2,5-dihydro-L-phenylalanine; L-aspartyl-L-(1-cyclohexen)-alanine, neotame, and mixtures thereof; (d) water-soluble sweeteners derived from naturally occurring water-soluble sweeteners, such as stevosides, chlorinated derivatives of ordinary sugar (sucrose), e.g., chlorodeoxysugar derivatives such as derivatives of chlorodeoxysucrose or chlorodeoxygalactosucrose, known, for example, under the product designation of Sucralose; examples of chlorodeoxysucrose and chlorodeoxygalactosucrose derivatives include but are not limited to: 1-chloro-1'-deoxysucrose; 4-chloro-4-deoxy-alpha-D-galactopyranosyl-alpha-D-fructofuranoside, or 4-chloro-4-deoxygalactosucrose;4-chloro-4-deoxy-alpha-D-galactopyranosyl-1-chloro-1-deoxy-beta-D-fructo-furanoside, or 4,1'- '-dichloro-4,1 '-dideoxygalactosucrose; 1',6'-dichloro-1',6'-dideoxysucrose; 4-chloro-4-deoxy-alpha-D-galactopyranosyl-1,6-dichloro-1,6-dideoxy-beta-D-fructofuranoside,or 4,11,6'-trichloro-4, 1',6'-trideoxygalactosucrose; 4,6-dichloro-4,6-dideoxy-alpha-D-galactopyranosyl-6-chloro-6-deoxy-beta-D-fructofuranoside, or 4,6,6'-trichloro-4,6,6'-trideoxygalactosucrose; 6,11,6'-trichloro-6,1',6'-trideoxysucrose; 4,6-dichloro-4,6-dideoxy-alpha-D-galacto-pyranosyl-1,6-dichloro-1,6-dideox y-beta-D-fructofuranoside, or 4,6,11,6'-tetrachloro-4,6, 1',6'-tetradeoxygalacto-sucrose; and 4,6,11,6'-tetradeoxy-sucrose, and mixtures thereof; (e) protein based sweeteners such as thaumaoccous danielli (Thaumatin I and 11), talin, and (f) amino acid based sweeteners.

In a preferred embodiment, the sweeteners include magap, sodium cyclamate, acesulfame K, neohesperidin dihydrochalcone, saccharin, saccharin sodium salt, aspartame, superaspartame, neotame, alitame, sucralose, lugduname, carrelame, sucrononate, sucrooctate, and/or from the group of naturally occurring sweeteners selected from the group consisting of miraculin, curculin, monellin, mabinlin, thaumatin, curculin, brazzein, pentadin, D-phenylalanine, D-tryptophane, or extracts or fractions derived from natural sources containing these amino acids and/or proteins, neohesperidin dihydrochalcone, steviolgylcoside, stevioside, steviolbioside, rebaudiosides (for example rebaudioside A, rebaudioside B, rebaudioside C, rebaudioside D, rebaudioside E, rebaudioside F, rebaudioside G, rebaudioside H, dulcoside, rubusoside), suavioside A, suavioside B, suavioside G, suavioside H, suavioside I, suavioside J, baiyunoside 1, baiyunoside 2, phlomisoside 1, phlomisoside 2, phlomisoside 3, phlomisoside 4, abrusoside A, abrusoside B, abrusoside C, abrusoside D, cyclocaryoside A and cyclocaryoside I, oslandin, polypodoside A, strogin 1, strogin 2, strogin 4, selligueanin A, dihydroquercetin-3-acetate,perillartine, telosmoside A.sub. 15, periandrin I-V, pterocaryoside, cyclocaryoside, mukurozioside, transanethol, trans-cinnamaldehyde, bryoside, bryonoside, bryonodulcoside, carnosifloside, scandenoside, gypenoside, trilobtain, phloridzin, dihydroflavanol, hematoxylin, cyanin, chlorogenic acid, albiziasaponin, telosmoside, gaudichaudioside, mogroside, hernandulcine, monatin, glycyrrhetin acid and derivatives thereof or their potassium, sodium, calcium or ammonium salts and phyllodulcin.

The intense sweetening agents may be used in many distinct physical forms well-known in the art to provide an initial burst of sweetness and/or a prolonged sensation of sweetness. Without being limited thereto, such physical forms include free forms; such as spray dried, powdered, beaded forms, encapsulated forms, and mixtures thereof. In one embodiment, the sweetener is a high intensity sweetener such as aspartame, sucralose, steviosides, monatin, and acesulfame potassium (Ace-K).

The active component (e.g., sweetener), which is part of the delivery system, may be used in amounts necessary to impart the desired effect associated with use of the active component (e.g., sweetness). With respect to their presence in the delivery system, the active components may be present in amounts of from about 1% to 70% by weight based on the total weight of the delivery system, including 5, 10, 15, 20, 25, 30, 35, 40, 45, 50, 55, 60, 65% by weight, and all values and ranges there between, for example, from about 10% to 40% by weight based on the total weight of the delivery system. For typical edible compositions including chewing gum compositions, confectionery compositions and beverage compositions, the sweeteners may be present in amounts of from about 0.1 % to 6% by weight based on the total weight of the edible composition, including 0.5, 1, 2, 3, 4, 5% by weight and all values and subranges there between, for example, 0.5% to 3% by weight. The active component especially when the active component is a sweetener may also be present in the edible composition in free form depending on the release profile desired.

In another aspect of the present invention, there is provided edible compositions that comprise the present delivery system and a carrier in an amount appropriate to accommodate the delivery system. The term "carrier" as used herein refers to an orally acceptable vehicle such as the soluble and insoluble components of a chewing gum composition capable of being mixed with the delivery system, and which will not cause harm to warm-blooded animals including humans. The carriers further include those components of the composition that are capable of being commingled without significant interaction with the delivery system.

In one embodiment of the present invention, the edible composition is a chewing gum composition having prolonged release (e.g., typically at least 15 minutes) of the active component. The chewing gum composition comprises a chewing gum base and the delivery system of the present invention that comprises an encapsulating material and at least one encapsulated active component such as, for example, a sweetener or a flavorant. The delivery system is present in amounts from about 0.2% to 10% by weight based on the total weight of the chewing gum composition, including 0.5, 1.0, 2.0, 3.0, 4.0, 5.0, 6.0, 7.0, 8.0, and 9.0% by weight including all values and subranges there between, for example, from about 1% to 5% by weight.

The present invention may be incorporated with a variety of processes for preparing chewing gum compositions as known in the art. Such chewing gum compositions may be and include a variety of different formulations that are typically used to make chewing gum products. Typically, a chewing gum composition contains a chewable gum base portion, which is essentially free of water and is water insoluble and a water-soluble bulk portion.

The water-soluble portion is generally released from the gum base portion over a period of time during chewing. The gum base portion is retained in the mouth throughout the chewing. The water insoluble gum base generally comprises elastomers, elastomer solvents, plasticizers, waxes, emulsifiers, and inorganic fillers. Plastic polymers such as polyvinyl acetate, which behave somewhat as plasticizers, are also included. Other plastic polymers that may be used include polyvinyl laurate, crosslinked polyvinyl pyrrolidone and polyhydroxy alkanoates.

The elastomers may constitute from about 5% to 95% by weight of the gum base. In another embodiment, the elastomers may constitute from about 10% to 70% by weight of the gum base and in another embodiment, 15% to 45% by weight of the gum base. Examples of elastomers include synthetic elastomers such as polyisobutylene, polybutylene, isobutylene-isoprene co-polymers, styrene-butadiene co-polymers, polyvinyl acetate and the like. Elastomers may also include natural elastomers such as natural rubber as well as natural gums such as jelutong, lechi caspi, perillo, massaranduba balata, chicle, gutta hang kang or combinations thereof. Other elastomers are known to those of ordinary skill in the art.

Elastomer plasticizers modify the finished gum firmness when used in the gum base. Elastomer plasticizers are typically present in an amount up to 75% by weight of the gum base. In another embodiment, the elastomer plasticizers are present in an amount of from about 5% to 45% by weight of the gum base and in another embodiment from about 10% to 30% by weight of gum base. Examples of elastomer plasticizers include natural rosin esters such as glycerol ester of partially hydrogenated rosin, glycerol ester of tall oil rosin, pentaerythritol esters of partially hydrogenated rosin, methyl and partially hydrogenated methyl esters of rosin, and the like. Synthetic elastomer plasticizers such as terpene resins may also be employed in gum base composition.

Waxes include synthetic and naturally occurring waxes such as polyethylene, bees wax, carnauba and the like. Petroleum waxes such a paraffin may also be used. The waxes may be present in the amount up to 30% by weight of the gum base. Waxes aid in the curing of the finished gum and help improve the release of flavor and may further extend the shelf life of the product.

Elastomer solvents are often resins such as terpene resins. Plasticizers, sometimes referred to as softeners, are typically fats and oils, including tallow, hydrogenated vegetable oils, and cocoa butter.

Gum base typically also includes a filler component. The filler component modifies the texture of the gum base and aid processing. Examples of such fillers include magnesium and aluminum silicates, clay, alumina, talc, titanium oxide, cellulose polymers, and the like. Fillers are typically present in the amount of from 1 % to 60% by weight.

Emulsifiers, which sometimes also have plasticizing properties, include glycerol monostearate, lecithin, and glycerol triacetate. Further, gum bases may also contain optional ingredients such as antioxidants, colors, and flavors.

The insoluble gum base may be present in the amount of from about 5% to 95% by weight of the chewing gum. In one embodiment, the insoluble gum base may present in the amount of from about 10% to 50% by weight of the gum base, and in another embodiment from about 20% to 40% by weight of the gum base.

Softeners are added to the chewing gum in order to optimize the chewability and mouth feel of the gum. Softeners, also known in the art as plasticizers or plasticizing agents, is generally present in amounts from about 0.5% to 15% by weight based on the total weight of the chewing gum composition. Softeners contemplated by the present invention include, for example, lecithin. Further, aqueous sweetener solutions such as those containing sorbitol, hydrogenated starch hydrolysate, corn syrup, and combinations thereof may be used as softeners and binding agents in the gum.

The chewing gum compositions of the present invention may be coated or uncoated and be in the form or slabs, sticks, pellets, balls and the like. The composition of the different forms of the chewing gum compositions will be similar but may vary with regard to the ratio of the ingredients. For example, coated gum compositions may contain a lower percentage of softeners. Pellets and balls have a small chewing gum core, which is then coated with either a sugar solution or a sugarless solution to create a hard shell. Slabs and sticks are usually formulated to be softer in texture than the chewing gum core.

Coating techniques for applying a coating for a chewing gum composition such as pan and spray coating are well known. In one embodiment, coating with solutions adapted to build a hard candy layer can be employed. Both sugar and sugar alcohols may be used for this purpose together with high intensity sweeteners, colorants, flavorants and binders.

Other components may be added in minor amounts to the coating syrup and include moisture absorbing compounds, anti-adherent compounds, dispersing agents and film forming agents. The moisture absorbing compounds suitable for use in the coating syrups include mannitol or dicalcium phosphate. Examples of useful anti-adherent compounds, which may also function as a filler, include talc, magnesium trisilicate and calcium carbonate. These ingredients may be employed in amounts of from about 0.5% to 5% by weight of the syrup. Examples of dispersing agents, which may be employed in the coating syrup, include titanium dioxide, talc or other anti-adherent compounds as set forth above.

The coating syrup is usually heated and a portion thereof deposited on the cores. Usually a single deposition of the coating syrup is not sufficient to provide the desired amount or thickness of coating and second, third or more coats of the coating syrup may be applied to build up the weight and thickness of the coating to desired levels with layers allowed to dry in-between coats.

A method ofpreparing a chewing gum composition is provided by sequentially adding the various chewing gum ingredients including the delivery system of the present invention to any commercially available mixer known in the art. After the ingredients have been thoroughly mixed, the gum base is discharged from the mixer and shaped into the desired form such as by rolling into sheets and cutting into sticks, extruding into chunks, or casing into pellets.

Generally, the ingredients are mixed by first melting the gum base and adding it to the running mixer. The base may also be melted into the mixer itself. Colors or emulsifiers may also be added at this time. A softener may be added to the mixer at this time, along with syrup and a portion of the bulking agent. Further parts of the bulking agent are then added to the mixer. Flavorants are typically added with the final portion of the bulking agent. Finally, the delivery system exhibiting a predetermined tensile strength is added to the resulting mixture. Other optional ingredients are added in the batch in a typical fashion, well known to those of ordinary skill in the art.

The entire mixing procedure typically takes from five to fifteen minutes, but longer mixing times may be required. Those skilled in the art will recognize that many variations of the above-described procedure may be follows.

After the ingredients are mixed, the gum mass may be formed into a variety of shapes and products. For example, the ingredients may be formed into pellets or balls and used as cores to make a coated chewing gum product. However, any type of chewing gum product can be utilized with the present invention.

If a coated product is desired, the coating may contain ingredients such as flavorants, artificial sweeteners, dispersing agents, coloring agents, film formers and binding agents. Flavorants contemplated by the present invention, include those commonly known in the art such as essential oils, synthetic flavors, or mixtures thereof, including but are not limited to, oils derived from plants and hits such as citrus oils, fruit essences, peppermint oil, spearmint oil, other mint oils, clove oil, oil of wintergreen, anise and the like. The flavorants may also be added to the coating syrup in an amount such that the coating may be present in amounts of from about 0.2% to 1.2% by weight flavoring agent. In another embodiment, the coating may be present in amounts from about 0.7% to 1.0% by weight flavoring agent.

Dispersing agents are often added to syrup coatings for the purpose of whitening and tack reduction. Dispersing agents contemplated by the present invention to be employed in the coating syrup include titanium dioxide, talc, or any other anti-stick compound. The dispersing agent may be added to the coating syrup in an amount such that the coating contains from about 0.1 % to 1.0%, including 0.2, 0.3, 0.4, 0.5, 0.6, 0.7, 0.8, 0.9 and all values and ranges there between, for example, from about 0.3% to 0.6% by weight of the agent.

Coloring agents may be added directly to the coating syrup in dye or lake form. Coloring agents contemplated by the present invention include food quality dyes. Film formers may be added to the coating syrup include methylcellulose, carboxymethyl cellulose, ethyl cellulose, hydroxyethyl cellulose, and the like or combinations thereof. Binding agents may be added either as an initial coating on the chewing gum center or may be added directly to the coating syrup. Binding agents contemplated by the present invention include gum Arabic, gum talha, gelatin, vegetable gums, and the like. The binding agents, when added to the coating syrup, are typically added in amounts from about 0.5% to 10% by weight.

The present invention further encompasses confectionery compositions containing the delivery system of the present invention. Confectionery compositions include, for example, compressed tablets such as mints, hard boiled candies, chocolates, chocolate containing products, nutrient bars, nougats, gels, centerfill confections, fondants, panning goods, consumable thin films and other compositions falling within the generally accepted definition of confectionery compositions.

Confectionery compositions in the form of pressed tablets such as mints may generally be made by combining finely sifted sugar or sugar substitute, flavoring agent (e.g. peppermint flavor) bulking agent such as gum Arabic, and an optional coloring agent. The flavoring agent, bulking agent are combined and then gradually the sugar or sugar substitute are added along with a coloring agent if needed.

The product is then granulated by passing through a seize of desired mesh size (e.g. 12 mesh) and then dried typically at temperatures of from about 55°C to 60°C. The resulting powder is fed into a tableting machine fitted with a large size punch and the resulting pellets are broken into granules and then pressed.

High boiled candies typically contain sugar or sugar substitute, glucose, water, flavoring agent and optional coloring agent. The sugar is dissolved in the water and glucose is then added. The mixture is brought to a boil. The resulting liquid to which may previously have been added a coloring agent is poured onto an oiled slab and cooled. The flavoring agent are then added and kneaded into the cooled mass. The resulting mixture is then fed to a drop roller assembly known in the art to form the final hard candy shape.

A nougat composition typically includes two principal components, a high boiled candy and a frappe. By way of example, egg albumen or substitute thereof is combined with water and whisked to form a light foam. Sugar and glucose are added to water and boiled typically at temperatures of from about 130°C to 140°C and the resulting boiled product is poured into a mixing machine and beat until creamy.

The beaten albumen and flavoring agent are combined with the creamy product and the combination is thereafter thoroughly mixed.

Further details regarding the preparation of confectionery compositions can be found in Skuse's Complete Confectioner (13th Edition) (1957) including pp. 41 -71, 133-144, and 255-262; and Sugar Confectionery Manufacture (2nd Edition) (1995), E.B. Jackson, Editor, pp. 129-168, 169-188, 189-216, 218-234, and 236-258.

Except as otherwise noted, the amount of the ingredients incorporated into the compositions according to the present invention is designated as % by weight based on the total weight of the composition.

### EXAMPLES

The following encapsulations can be prepared as shown in the Tables 1 and 2 as shown below.

Table 1 shows encapsulations made by blending polyvinyl acetate, Aspartame, hydrogenated vegetable oil and glycerol monostearate together in an extruder. All percentages are by weight based on the weight of the delivery system. The properties d0; L; P; d; P/L; x; and x/d shown in Tables 1 and 2 are defined in paragraphs [0026] to [0029] above. The values for d and x were obtained by first cross-sectioning extruded rods of the encapsulated Aspartame and then smoothing the cross-section by milling with an ultra-microtome. The smoothed face was washed and then the sample was sputter-coated with gold and then imaged by scanning electron microscopy (SEM). The images were analyzed manually by measuring the diameters of the sweetener voids and the distances between them.

The R40 values shown in Tables 1 and 2 stand for the percentage of encapsulated Aspartame that is released after being dissolved in water for 40 minutes. These values were obtained by doing dissolution studies on a USP compliant tester with real-time in-situ UV quantification. It has been established that R40 values correlate to degrees of longer lasting sweetness and flavor in-product. Thus, lower R40 values as shown in Examples 2, 3, 5 and 6 are preferred over the higher R40 values in Comparative Examples 1 and 4 for their enhanced longer lastingness.

The "Encapsulation Efficiency" or "%EE" values shown in Tables 1 and 2 are indicative the percentage of Aspartame that is truly encapsulated. This %EE is equal to (Total Aspartame Load Minus Unencapsulated Aspartame) divided by (Total Aspartame Load) times 100. Aspartame that remains on the surface of the delivery system after the encapsulating process acts like free aspartame in the final chewing gum product. Thus, low %EE values that are shown in Comparative Examples 1 and 4 are indicative of a high proportion of surface Aspartame and a low proportion of truly encapsulated Aspartame. And, high %EE values that are shown in Examples 2, 3 and 5-9 are indicative of a low proportion of surface Aspartame and a high proportion of truly encapsulated Aspartame. A high %EE is associated with long lasting sweetness and flavor in-product.

**TABLE 1**

| | Comparative Example 1 | Example 2 | Example 3 | Comparative Example 4 | Example 5 | Example 6 |
|---|---|---|---|---|---|---|
| Description | Comparative Example Standard | Standard with lower load to maximize x/d by increasing x | Standard with improved mixing to maximize x/d by decreasing d | Comparative example standard illustrating negative effect of small d (compare to example 1) | Comparative example standard illustrating overcoming small d by decreasing L | Same as Example 6 but allows for comparison to Example 2 to illustrate importance of x/d despite differing P/d's |
| PVAc B100 | 65% | 82.5% | 65% | 65% | 88% | 82.5% |
| Aspartame | 30% | 15% | 30% | 30% | 5% | 15% |
| Hydrogenated Vegetable Oil | 3.25% | 1.625% | 3.25% | 3.25% | 4.4% | 1.625% |
| Glyceryl Monostearate (GMS) | 1.75% | 0.875% | 1.75% | 1.75% | 2.375% | 0.875% |
| Calcium Carbonate Filler | 0 | 0 | 0 | 0 | 0 | 0 |
| Talc Filler | 0 | 0 | 0 | 0 | 0 | 0 |
| | | | | | | |
| d0 | 14 | 14 | 14 | 6 | 6 | 6 |
| L | 30 | 15 | 30 | 30 | 5 | 15 |
| P | 250 | 250 | 250 | 250 | 250 | 250 |
| d | 10 | 10 | 2 | 0.35 | 0.35 | 0.35 |
| P/d | 25 | 25 | 125 | 714 | 714 | 714 |
| x | 5 | 10 | 2 | 0.2 | 1.2 | 0.4 |
| x/d | 0.5 | 1 | 1 | 0.57 | 3.4 | 1.1 |
| | | | | | | |
| Filler PSD | Not applicable | Not Applicable | Not Applicable | Not Applicable | Not Applicable | Not applicable |
| | | | | | | |
| R40 | 65 | 21 | 25 | 70 | 13 | 28 |
| %EE | 55 | 85 | 85 | 60 | 90 | 82 |

Table 2 shows encapsulations made by blending polyvinyl acetate, Aspartame, hydrogenated vegetable oil, glycerol monostearate and either talc or calcium carbonate together in an extruder. All percentages are by weight based on the weight of the delivery system.

The Filler PDS is the average particle size of the filler as obtained from the supplier of the filler.

**Table 2**

| | Example 7 | Example 8 | Example 9 | Example 10 |
|---|---|---|---|---|
| Description | Standard with talc a illustrating effect of filler despite low x/d (compare to example 1) | Standard with calcium carbonate illustrating effect of filler despite low x/d (compare to example 1) | Standard with talc and improved mixing illustrating further enhancing effect of filler (compare to example 3) | Standard with calcium carbonate and improved mixing illustrating further enhancing effect of filler (compare to example 3) |
| PVAc B100 | 62 | 62 | 62 | 62 |
| Aspartame | 30 | 30 | 30 | 30 |
| Hydrogenated Vegetable Oil | 3.25 | 3.25 | 3.25 | 3.25 |
| GMS | 1.75 | 1.75 | 1.75 | 1.75 |
| Calcium Carbonate Filler | 3 | 0 | 3 | 0 |
| Talc Filler | 0 | 3 | 0 | 3 |
| | | | | |
| d₀ | 14 | 14 | 14 | 14 |
| L | 30 | 30 | 30 | 30 |
| P | 250 | 250 | 250 | 250 |
| d | 10 | 10 | 2 | 2 |
| P/d | 25 | 25 | 125 | 125 |
| x | 5 | 5 | 2 | 2 |
| x/d | 0.5 | 0.5 | 1 | 1 |
| | | | | |
| Filler PSD | 7 | <20 | 7 | <20 |
| | | | | |
| R40 | 26 | 24 | 12 | 15 |
| %EE | 79 | 81 | 91 | 89 |

The above-noted delivery systems can be mixed, e.g., in an extruder as described herein, with standard chewing ingredients.

Example 10: A gum formulation with encapsulated sweeteners (i.e., Acesulfame K and Aspartame) of the present invention may be made.

| RAW MATERIALS | W/W |
|---|---|
| **GUM CORE** | 70.670 |
| MALTITOL CRYSTALLINE | 26.657 |
| GUM ARABIC | 1.866 |
| PEPPERMINT OIL | 0.098 |
| WINTERGREEN FLAVOR, ARTIFICIAL | 0.020 |
| 1-MENTHOL SYNTHETIC | 0.410 |
| COOLER II LIQUID | 0.049 |
| ACESULFAME POTASSIUM MILLED | 0.156 |
| CHLOROPHYLL JJ | 0.014 |
| WAX CANDELILLA, POWDERED | 0.062 |
| TOTAL | 100.000 |
| | |
| GUM BASE* | 30.000 |
| MALTITOL AMALTY MR- 100 | 35.748 |
| MALTITOL AMALTY MR-50 | 16.000 |
| XYLITIOL KAI M, IMANAKA MATERIALS | |
| LTD. | 7.500 |
| LYCASIN | 3.500 |
| GREEN HERB WHOLE PASTE | 0.100 |
| OAKLEAN WHOLE PASTE | 0.100 |
| PEROXIDASE PREPARATION T-1 | 0.220 |
| RETSYN BLEND | 0.800 |
| ASPARTAME | 0.450 |
| ENCAPSULATED ACESULFAME | |
| POTASSIUM | 0.600 |
| ENCAPSULATED ASPARTAME | 2.400 |
| PEPPERMINT OIL | 1.600 |
| 1-MENTHOL SYNTHETIC | 0.360 |
| COOLER 11 LIQUID | 0.300 |
| COOLING POWDER | 0.300 |
| CHLOROPHYLL JJ | 0.022 |
| TOTAL | 100.000 |
| | |
| **DUSTING POWDER** | |
| MANNITOL 3.5 | 100.000 |
| | |
| **RETSYN BLEND** | |
| HYDROGENATED SOYBEAN OIL | 20.000 |
| LECITHIN | 3.000 |
| MALTITOL SYRUP, LYCASIN 80/55 | 10.000 |
| WATER | 67.000 |
| TOTAL | 100.000 |
| | |
| **GUM BASE** | |
| GUM BASE, 14% TALC | 70.000 |
| GUM BASE 20% TALC | 30.000 |
| TOTAL | 100.000 |

Obviously, numerous modifications and variations of the present invention are possible in light of the above teachings. It is therefore to be understood that within the scope of the appended claims, the invention may be practiced otherwise than as specifically described herein.

## Claims

1. A delivery system for inclusion in an edible composition comprising at least one active component, wherein the active component has an average particle size of 0.3 to 20 microns;
at least one polymeric material selected from polyvinyl acetate, polyethylene, crosslinked polyvinyl pyrrolidone, polymethylmethacrylate, polylactic acid, polyhydroxyalkanoates, ethylcellulose, polyvinyl acetatephthalate, polyethylene glycol esters, methacrylic acid-co-methylmethacrylate and combinations thereof;
at least one insoluble additive, wherein the additive is selected from hydrogenated vegetable oil, talc, calcium carbonate, dicalcium phosphate, silica and silicates and combinations thereof, and the amount of additive is less than 10% by weight of the delivery system;
wherein the delivery system is substantially free of solvent;
wherein the at least one polymeric material encapsulates at least 70% of the at least one active component;
wherein the delivery system has an average particle size of 125 microns to 900 microns;
wherein the dispersion of active component particles, as measured by the average distance between active component particles in the delivery system divided by the average particle diameter of the active component particles, is from 0.5 to 20.

2. The delivery system of claim 1, wherein the ratio of the average particle size of the delivery system to the average diameter of the active component is from 25 to 750 microns.

3. The delivery system of claim 1, which further comprises wax, a plasticizer, an emulsifier, polypropylene glycol, polyethylene glycol, polyisobutylene, polyethylene, or a combination thereof.

4. The delivery system of claim 1, wherein the at least one active component is present in an amount of 5 wt% to 55 wt% by weight of the delivery system and the at least one polymer is present in an amount of 45 wt% to 95 wt% by weight of the delivery system.

5. The delivery system of Claim 1, wherein the delivery system has a tensile strength of at least 10,000 psi.

6. The delivery system of claim 1, wherein the at least one active component is coated with a material that is less miscible with the at least one polymeric material relative to the miscibility of the active component with the at least one polymeric material.

7. The delivery system of claim 1, wherein the at least one polymeric material has a water-absorption value of up to 15% as measured according to ASTM D570-98.

8. The delivery system of claim 1, wherein the active component is selected from a sweetener, an acid, a flavorant, a pharmaceutical, a therapeutic agent, a vitamin, a mineral, a breath freshener, a tooth whitener, a tooth cleaner, a warming agent, a sensate, a cooling agent and combinations thereof.

9. The delivery system of claim 1, wherein the active component is at least one sweetener and is a high intensity sweetener.

10. The delivery system of claim 1, wherein the active component is a sweetener selected from an amino acid based sweetener, a dipeptide sweetener, glycyrrhizin, saccharin, a saccharin salt, an acesulfame salt, a cyclamate, a stevioside, talin, a dihydrochalone compound, a chlorinated sucrose, and combinations thereof.

11. An edible composition, comprising a delivery system according to claim 1 and at least one additional edible component wherein the at least one active is released for at least 20 minutes from the composition after the composition is consumed.

12. The edible composition according to claim 11, which is a chocolate, a soft candy, a hard candy, a chewing gum or a combination thereof.

13. A method of manufacturing the delivery system of claim 1, the method comprising combining the at least one polymeric material with the at least one active component in a mixer to form a pre-mix, and mixing of the premix in the mixer; then adding the at least one insoluble additive to the mixed pre-mix, and mixing at least one insoluble additive to the mixed pre-mix.

14. The method of claim 13, wherein the mixer is an extruder.

## Patentansprüche

1. Verabreichungssystem zur Einbindung in eine essbare Zusammensetzung, umfassend zumindest einen Wirkstoff, wobei der Wirkstoff eine mittlere Partikelgröße von 0,3 bis 20 Mikrometer aufweist;
zumindest ein polymeres Material ausgewählt aus Polyvinylacetat, Polyethylen, vernetztem Polyvinylpyrrolidon, Polymethylmethacrylat, Polymilchsäure, Polyhydroxyalkanoaten, Ethylcellulose, Polyvinylacetatphthalat, Polyethylenglykolestern, Methacrylsäure-co-methylmethacrylat und Kombinationen davon;
zumindest ein unlösliches Additiv, wobei das Additiv ausgewählt ist aus hydriertem Pflanzenöl, Talk, Calciumcarbonat, Dicalciumphosphat, Siliziumidoxid und Silikaten und Kombinationen davon, und wobei die Menge des Additivs weniger als 10 Gew.-% des Verabreichungssystems beträgt;
wobei das Verabreichungssystem im Wesentlichen frei von Lösungsmitteln ist;
wobei das zumindest eine polymere Material zumindest 70 % des zumindest einen Wirkstoffs verkapselt;
wobei das Verabreichungssystem eine mittlere Partikelgröße von 125 Mikrometer bis etwa 900 Mikrometer aufweist; und
wobei die Dispersion der Partikel des Wirkstoffs, gemessen als der mittlere Abstand zwischen den Partikeln des Wirkstoffs in dem Verabreichungssystem dividiert durch den mittleren Partikeldurchmesser der Partikel des Wirkstoffs, von 0,5 bis 20 beträgt.

2. Verabreichungssystem nach Anspruch 1, wobei das Verhältnis der mittleren Partikelgröße des Verabreichungssystems zum mittleren Durchmesser des Wirkstoffs von 25 bis 750 Mikrometer beträgt.

3. Verabreichungssystem nach Anspruch 1, das des Weiteren Wachs, einen Weichmacher, einen Emulgator, Polypropylenglykol, Polyethylenglykol, Polyisobutylen, Polyethylen, oder eine Kombination davon umfasst.

4. Verabreichungssystem nach Anspruch 1, wobei der zumindest eine Wirkstoff in einer Menge von 5 Gew.-% bis 55 Gew.-% des Gewichts des Verabreichungssystems vorliegt, und das zumindest eine Polymer in einer Menge von 45 Gew.-% bis 95 Gew.-% des Gewichts des Verabreichungssystems vorliegt.

5. Verabreichungssystem nach Anspruch 1, wobei das Verabreichungssystem eine Zugfestigkeit von zumindest etwa 10.000 psi aufweist.

6. Verabreichungssystem nach Anspruch 1, wobei der zumindest eine Wirkstoff mit einem Material beschichtet ist, das mit dem zumindest einen polymeren Material, im Vergleich zur Mischbarkeit des Wirkstoffs mit dem zumindest einen polymeren Material, weniger mischbar ist.

7. Verabreichungssystem nach Anspruch 1, wobei das zumindest eine polymere Material einen Wasserabsorptionswert von bis zu 15 % gemessen nach ASTM D570-98 aufweist.

8. Verabreichungssystem nach Anspruch 1, wobei der Wirkstoff ausgewählt ist aus einem Süßstoff, einer Säure, einem Geschmacksstoff, einem Pharmazeutikum, einem therapeutischen Mittel, einem Vitamin, einem Mineral, einem Atemerfrischer, einem Zahnaufheller, einem Zahnreinigungsmittel, einem Wärmemittel, einem Sensat, einem Kühlmittel und Kombinationen davon.

9. Verabreichungssystem nach Anspruch 1, wobei der Wirkstoff zumindest ein Süßstoff ist und ein Intensivsüßstoff ist.

10. Verabreichungssystem nach Anspruch 1, wobei der Wirkstoff ein Süßstoff ist, ausgewählt aus einem aminosäurebasierten Süßstoff, einem Dipeptid-Süßstoff, Glycyrrhizin, Saccharin, einem Saccharinsalz, einem Acesulfamsalz, einem Cyclamat, einem Steviosid, Talin, einer Dihydrochalkon-Verbindung, einer chlorierten Sucrose, und Kombinationen davon.

11. Essbare Zusammensetzung, umfassend ein Verabreichungssystem nach Anspruch 1 und zumindest eine zusätzliche essbare Komponente, wobei der zumindest eine Wirkstoff für zumindest 20 Minuten aus der Zusammensetzung freigesetzt wird, nachdem die Zusammensetzung konsumiert wurde.

12. Essbare Zusammensetzung nach Anspruch 11, die eine Schokolade, ein Softbonbon, ein Hartbonbon, ein Kaugummi oder eine Kombination davon ist.

13. Verfahren zur Herstellung des Verabreichungssystems nach Anspruch 1, wobei das Verfahren das Kombinieren des zumindest einen polymeren Materials mit dem zumindest einen Wirkstoff in einem Mischer zur Bildung einer Vormischung, und das Mischen der Vormischung in dem Mischer; dann das Hinzufügen des zumindest einen unlöslichen Additivs zu der gemischten Vormischung, und Mischen des zumindest einen unlöslichen Additivs mit der Vormischung umfasst.

14. Verfahren nach Anspruch 13, wobei der Mischer ein Extruder ist.

## Revendications

1. Système d'administration d'une inclusion dans une composition comestible comprenant au moins un composant actif, le composant actif ayant une taille de particule moyenne de 0,3 à 20 µm ;
au moins une matière polymère choisie parmi l'acétate de polyvinyle, le polyéthylène, la polyvinylpyrrolidone réticulée, le polyméthacrylate de méthyle, l'acide polylactique, les polyhydroxyalcanoates, l'éthylcellulose, l'acétatephtalate de polyvinyle, les esters de polyéthylène glycol, un mélange d'acide méthacrylique-méthacrylate de méthyle et des combinaisons de ceux-ci ;
au moins un additif insoluble, l'additif étant choisi parmi une huile végétale hydrogénée, du talc, du carbonate de calcium, du phosphate dicalcique, de la silice et des silicates et des combinaisons de ceux-ci, et la quantité d'additif étant inférieure à 10 % en poids du système d'administration ;
dans lequel le système d'administration est sensiblement exempt de solvant ;
dans lequel l'au moins une matière polymère encapsule au moins 70 % de l'au moins un composant actif ;
dans lequel le système d'administration a une taille de particule moyenne de 125 µm à 900 µm,
dans lequel la dispersion des particules de composant actif, mesurée par la distance moyenne entre les particules de composant actif dans le système d'administration divisée par le diamètre de particule moyen des particules de composant actif, est de 0,5 à 20.

2. Système d'administration selon la revendication 1, dans lequel le rapport de la taille moyenne de particule du système d'administration au diamètre moyen du composant actif est de 25 à 750 µm.

3. Système d'administration selon la revendication 1, qui comprend en outre une cire, un plastifiant, un émulsifiant, un polypropylène glycol, un polyéthylène glycol, un polyisobutylène, un polyéthylène ou une combinaison de ceux-ci.

4. Système d'administration selon la revendication 1, dans lequel l'au moins un composant actif est présent en une quantité de 5 % en poids à 55 % en poids du système d'administration et l'au moins un polymère est présent en une quantité de 45 % en poids à 95 % en poids du système d'administration.

5. Système d'administration selon la revendication 1, dans lequel le système d'administration a une résistance à la traction d'au moins 10 000 psi.

6. Système d'administration selon la revendication 1, dans lequel l'au moins un composant actif est revêtu d'une substance qui est moins miscible avec l'au moins une matière polymère par rapport à la miscibilité du composant actif avec l'au moins une matière polymère.

7. Système d'administration selon la revendication 1, dans lequel l'au moins une matière polymère a une valeur d'absorption d'eau allant jusqu'à 15 %, mesurée selon la norme ASTM D570-98.

8. Système d'administration selon la revendication 1, dans lequel le composant actif est choisi parmi un édulcorant, un acide, un arôme, un composé pharmaceutique, un agent thérapeutique, une vitamine, un minéral, un rafraîchisseur d'haleine, un blanchisseur dentaire, un nettoyant dentaire, un agent chauffant, un agent sensoriel, un agent refroidissant et des combinaisons de ceux-ci.

9. Système d'administration selon la revendication 1, dans lequel le composant actif est au moins un édulcorant et est un édulcorant de grande intensité.

10. Système d'administration selon la revendication 1, dans lequel le composant actif est un édulcorant choisi parmi un édulcorant à base d'acide aminé, un édulcorant dipeptidique, la glycyrrhizine, la saccharine, un sel de saccharine, un sel d'acésulfame, un cyclamate, un stévioside, la taline, un composé de dihydrochalone, un saccharose chloré et des combinaisons de ceux-ci.

11. Composition comestible comprenant un système d'administration selon la revendication 1 et au moins un composant comestible supplémentaire, dans laquelle l'au moins un composant actif est libéré par la composition pendant au moins 20 minutes après sa mise en bouche.

12. Composition comestible selon la revendication 11, qui est un chocolat, un bonbon mou, un bonbon dur, un chewing-gum ou une combinaison de ceux-ci.

13. Procédé de fabrication du système d'administration selon la revendication 1, le procédé consistant à combiner l'au moins une matière polymère avec l'au moins un composant actif dans un malaxeur pour former un prémélange, et mélanger le prémélange dans le malaxeur ; puis ajouter l'au moins un additif insoluble au prémélange mélangé, et mélanger au moins un additif insoluble au prémélange mélangé.

14. Procédé selon la revendication 13, dans lequel le malaxeur est une extrudeuse.
